# EUROPEAN PATENT APPLICATION

(11) **EP 4 408 093 A1**
(43) Date of publication of application: **31.07.2024**
(21) Application number: 21957928.1
(22) Date of filing: 24.09.2021
(51) Int. Cl.: H04W 72/00

(54) **CARRIER SWITCHING METHOD AND APPARATUS**

(71) Applicant: Beijing Xiaomi Mobile Software Co., Ltd., Beijing 100085 (CN)
(72) Inventor: YAN, Kaiyue, Beijing 100085 (CN)
(74) Representative: Stöckeler, Ferdinand
(86) International application number: PCT/CN2021/120459
(87) International publication number: WO 2023/044804

(57) **Abstract**

Disclosed in the embodiments of the present application are a carrier switching method and apparatus. The method comprises: receiving a carrier switching indication; and according to the carrier switching indication, determining, from candidate carriers, a target carrier of a physical uplink control channel, wherein the carrier switching indication comprises at least one of the following: an additional field in downlink control information (DCI), a physical uplink control channel resource reuse indication (PRI), a hybrid automatic repeat request (HARQ) feedback time reuse indication, an uplink/supplementary uplink (UL/SUL) reuse indication, and an indication of reusing a carrier in the DCI. A terminal device can perform carrier switching according to an indication, thereby ensuring the sending reliability and the feedback efficiency of a HARQ-ACK, reducing interference, and improving load balancing.

## Description

### TECHNICAL FIELD

The disclosure relates to the field of communication technologies, and particularly to a method and an apparatus for carrier handover.

### BACKGROUND

With the continued development of mobile communication technologies, subjects of industrial Internet of Things (IIoT) and ultra reliable and low latency communication (URLLC) have been provided in the context of 5th generation (5G) mobile communication technology. When physical uplink control channel (PUCCH) resources are unavailable, a PUCCH dynamic carrier handover may be performed.

### SUMMARY

According to a first aspect of embodiments of the disclosure, a method for carrier handover is provided. The method is performed by a terminal device. The method includes: receiving a carrier handover indication; and determining, from candidate carriers, a target carrier of a PUCCH according to the carrier handover indication.

The carrier handover indication includes at least one of: an additional field in a downlink control information (DCI); a multiplexed PUCCH resource indication (PRI); a multiplexed hybrid automatic repeat request (HARQ) feedback time indication; a multiplexed uplink/supplementary uplink (UL/SUL) indication; or a multiplexed carrier indication in a DCI.

Optionally, a number of the candidate carriers is two, and the carrier handover indication includes the additional field in the DCI; in which the additional field includes at least one bit and is configured to indicate the carrier handover between the two candidate carriers.

Optionally, a number of the candidate carriers is two, and the carrier handover indication includes the multiplexed PRI; in which the multiplexed PRI includes at least one bit and is configured to indicate the carrier handover between the two candidate carriers.

Optionally, a number of the candidate carriers is two, and the carrier handover indication includes the multiplexed HARQ feedback time indication; in which the HARQ feedback time indication is configured to implicitly indicate the carrier handover between the two candidate carriers.

Optionally, a number of the candidate carriers is two, and the carrier handover indication includes the multiplexed UL/SUL indication; in which the UL/SUL indication is configured to indicate the carrier handover between the two candidate carriers.

Optionally, a number of the candidate carriers is four, and the carrier handover indication includes the multiplexed PRI; in which the multiplexed PRI includes first indication information and second indication information, the first indication information is configured to indicate a candidate carrier subset where the target carrier is located or a carrier index of the target carrier, and the second indication information is configured to indicate an available PUCCH time frequency resource of the target carrier.

Optionally, a number of the candidate carriers is four, and the carrier handover indication includes the multiplexed PRI; in which the PRI includes third indication information, and the third indication information is configured to indicate the target carrier and a corresponding PUCCH time frequency resource.

Optionally, a number of the candidate carriers is four, and the carrier handover indication includes a joint indication of the UL/SUL and the PRI; in which the UL/SUL indication is configured to indicate a candidate carrier subset where the target carrier is located, and the PRI is configured to indicate a target PUCCH time frequency resource in a time frequency resource set corresponding to the candidate carrier subset.

Optionally, a number of the candidate carriers is four, and the carrier handover indication includes a joint indication of the carrier indication in the DCI and the PRI; in which the carrier indication is configured to indicate a carrier index of the target carrier, and the PRI is configured to indicate a target PUCCH time frequency resource in a time frequency resource set corresponding to the target carrier.

Optionally, a number of the candidate carriers is four, and the carrier handover indication includes a joint indication of the HARQ feedback time and the PRI; in which the HARQ feedback time indication is configured to implicitly indicate a candidate carrier subset where the target carrier is located, and the PRI is configured to indicate a target PUCCH time frequency resource in a time frequency resource set corresponding to the candidate carrier subset.

According to a second aspect of embodiments of the disclosure, a method for carrier handover is provided. The method is performed by a network device. The method includes: transmitting a carrier handover indication; in which the carrier handover indication is configured to indicate a terminal device to determine, from candidate carriers, a target carrier of a PUCCH.

The carrier handover indication includes at least one of: an additional field in a DCI; a multiplexed PRI; a multiplexed HARQ feedback time indication; a multiplexed UL/SUL indication; or a multiplexed carrier indication in a DCI.

Optionally, a number of the candidate carriers is two, and the carrier handover indication includes the additional field in the DCI; in which the additional field includes at least one bit and is configured to indicate the carrier handover between the two candidate carriers.

Optionally, a number of the candidate carriers is two, and the carrier handover indication includes the multiplexed PRI; in which the multiplexed PRI includes at least one bit and is configured to indicate the carrier handover between the two candidate carriers.

Optionally, a number of the candidate carriers is two, and the carrier handover indication includes the multiplexed HARQ feedback time indication; in which the HARQ feedback time indication is configured to implicitly indicate the carrier handover between the two candidate carriers.

Optionally, a number of the candidate carriers is two, and the carrier handover indication includes the multiplexed UL/SUL indication; in which the UL/SUL indication is configured to indicate the carrier handover between the two candidate carriers.

Optionally, a number of the candidate carriers is four, and the carrier handover indication includes the multiplexed PRI; in which the multiplexed PRI includes first indication information and second indication information, the first indication information is configured to indicate a candidate carrier subset where the target carrier is located or a carrier index of the target carrier, and the second indication information is configured to indicate an available PUCCH time frequency resource of the target carrier.

Optionally, a number of the candidate carriers is four, and the carrier handover indication includes the multiplexed PRI; in which the PRI includes third indication information, and the third indication information is configured to indicate the target carrier and a corresponding PUCCH time frequency resource.

Optionally, a number of the candidate carriers is four, and the carrier handover indication includes a joint indication of the UL/SUL and the PRI; in which the UL/SUL indication is configured to indicate a candidate carrier subset where the target carrier is located, and the PRI is configured to indicate a target PUCCH time frequency resource in a time frequency resource set corresponding to the candidate carrier subset.

Optionally, a number of the candidate carriers is four, and the carrier handover indication includes a joint indication of the carrier indication in the DCI and the PRI; in which the carrier indication is configured to indicate a carrier index of the target carrier, and the PRI is configured to indicate a target PUCCH time frequency resource in a time frequency resource set corresponding to the target carrier.

Optionally, a number of the candidate carriers is four, and the carrier handover indication includes a joint indication of the HARQ feedback time and the PRI; in which the HARQ feedback time indication is configured to implicitly indicate a candidate carrier subset where the target carrier is located, and the PRI is configured to indicate a target PUCCH time frequency resource in a time frequency resource set corresponding to the candidate carrier subset.

According of a third aspect of embodiments of the disclosure, an apparatus for carrier handover is provided. The apparatus includes: a transceiving unit, configured to receive a carrier handover indication; and a processing unit, configured to determine, from candidate carriers, a target carrier of a PUCCH according to the carrier handover indication.

The carrier handover indication includes at least one of: an additional field in a DCI; a multiplexed PRI; a multiplexed HARQ feedback time indication; a multiplexed UL/SUL indication; or a multiplexed carrier indication in a DCI.

Optionally, a number of the candidate carriers is two, and the carrier handover indication includes the additional field in the DCI; in which the additional field includes at least one bit and is configured to indicate the carrier handover between the two candidate carriers.

Optionally, a number of the candidate carriers is two, and the carrier handover indication includes the multiplexed PRI; in which the multiplexed PRI includes at least one bit and is configured to indicate the carrier handover between the two candidate carriers.

Optionally, a number of the candidate carriers is two, and the carrier handover indication includes the multiplexed HARQ feedback time indication; in which the HARQ feedback time indication is configured to implicitly indicate the carrier handover between the two candidate carriers.

Optionally, a number of the candidate carriers is two, and the carrier handover indication includes the multiplexed UL/SUL indication; in which the UL/SUL indication is configured to indicate the carrier handover between the two candidate carriers.

Optionally, a number of the candidate carriers is four, and the carrier handover indication includes the multiplexed PRI; in which the multiplexed PRI includes first indication information and second indication information, the first indication information is configured to indicate a candidate carrier subset where the target carrier is located or a carrier index of the target carrier, and the second indication information is configured to indicate an available PUCCH time frequency resource of the target carrier.

Optionally, a number of the candidate carriers is four, and the carrier handover indication includes the multiplexed PRI; in which the PRI includes third indication information, and the third indication information is configured to indicate the target carrier and a corresponding PUCCH time frequency resource.

Optionally, a number of the candidate carriers is four, and the carrier handover indication includes a joint indication of the UL/SUL and the PRI; in which the UL/SUL indication is configured to indicate a candidate carrier subset where the target carrier is located, and the PRI is configured to indicate a target PUCCH time frequency resource in a time frequency resource set corresponding to the candidate carrier subset.

Optionally, a number of the candidate carriers is four, and the carrier handover indication includes a joint indication of the carrier indication in the DCI and the PRI; in which the carrier indication is configured to indicate a carrier index of the target carrier, and the PRI is configured to indicate a target PUCCH time frequency resource in a time frequency resource set corresponding to the target carrier.

Optionally, a number of the candidate carriers is four, and the carrier handover indication includes a joint indication of the HARQ feedback time and the PRI; in which the HARQ feedback time indication is configured to implicitly indicate a candidate carrier subset where the target carrier is located, and the PRI is configured to indicate a target PUCCH time frequency resource in a time frequency resource set corresponding to the candidate carrier subset.

According of a fourth aspect of embodiments of the disclosure, an apparatus for carrier handover is provided. The apparatus includes: a transceiving unit, configured to transmit a carrier handover indication; in which the carrier handover indication is configured to indicate a terminal device to determine, from candidate carriers, a target carrier of a PUCCH.

The carrier handover indication includes at least one of: an additional field in a DCI; a multiplexed PRI; a multiplexed HARQ feedback time indication; a multiplexed UL/SUL indication; or a multiplexed carrier indication in a DCI.

Optionally, a number of the candidate carriers is two, and the carrier handover indication includes the additional field in the DCI; in which the additional field includes at least one bit and is configured to indicate the carrier handover between the two candidate carriers.

Optionally, a number of the candidate carriers is two, and the carrier handover indication includes the multiplexed PRI; in which the multiplexed PRI includes at least one bit and is configured to indicate the carrier handover between the two candidate carriers.

Optionally, a number of the candidate carriers is two, and the carrier handover indication includes the multiplexed HARQ feedback time indication; in which the HARQ feedback time indication is configured to implicitly indicate the carrier handover between the two candidate carriers.

Optionally, a number of the candidate carriers is two, and the carrier handover indication includes the multiplexed UL/SUL indication; in which the UL/SUL indication is configured to indicate the carrier handover between the two candidate carriers.

Optionally, a number of the candidate carriers is four, and the carrier handover indication includes the multiplexed PRI; in which the multiplexed PRI includes first indication information and second indication information, the first indication information is configured to indicate a candidate carrier subset where the target carrier is located or a carrier index of the target carrier, and the second indication information is configured to indicate an available PUCCH time frequency resource of the target carrier.

Optionally, a number of the candidate carriers is four, and the carrier handover indication includes the multiplexed PRI; in which the PRI includes third indication information, and the third indication information is configured to indicate the target carrier and a corresponding PUCCH time frequency resource.

Optionally, a number of the candidate carriers is four, and the carrier handover indication includes a joint indication of the UL/SUL and the PRI; in which the UL/SUL indication is configured to indicate a candidate carrier subset where the target carrier is located, and the PRI is configured to indicate a target PUCCH time frequency resource in a time frequency resource set corresponding to the candidate carrier subset.

Optionally, a number of the candidate carriers is four, and the carrier handover indication includes a joint indication of the carrier indication in the DCI and the PRI; in which the carrier indication is configured to indicate a carrier index of the target carrier, and the PRI is configured to indicate a target PUCCH time frequency resource in a time frequency resource set corresponding to the target carrier.

Optionally, a number of the candidate carriers is four, and the carrier handover indication includes a joint indication of the HARQ feedback time and the PRI; in which the HARQ feedback time indication is configured to implicitly indicate a candidate carrier subset where the target carrier is located, and the PRI is configured to indicate a target PUCCH time frequency resource in a time frequency resource set corresponding to the candidate carrier subset.

According to a fifth aspect of embodiments of the disclosure, a communication device is provided and includes a processor and a memory, in which the memory is stored with a computer program, and the processor executes the computer program stored in the memory, to cause the device to perform the method for carrier handover according to the first aspect of embodiments.

According to a sixth aspect of embodiments of the disclosure, a communication device is provided and includes a processor and a memory, in which the memory is stored with a computer program, and the processor executes the computer program stored in the memory, to cause the device to perform the method for carrier handover according to the second aspect of embodiments.

According to a seventh aspect of embodiments of the disclosure, a communication device is provided and includes a processor and an interface circuit. The interface circuit is configured to receive code instructions and transmit the code instructions to the processor; and the processor is configured to run the code instructions so that the device performs the method for carrier handover according to the first aspect of embodiments.

According to an eighth aspect of embodiments of the disclosure, a communication device is provided and includes a processor and an interface circuit. The interface circuit is configured to receive code instructions and transmit the code instructions to the processor; and the processor is configured to run the code instructions so that the device performs the method for carrier handover according to the second aspect of embodiments.

According to a ninth aspect of embodiments of the disclosure, a computer-readable storage medium for storing instructions is provided. When the instructions are executed, the method for carrier handover according to the first aspect of embodiments is implemented.

According to a tenth aspect of embodiments of the disclosure, a computer-readable storage medium for storing instructions is provided. When the instructions are executed, the method for carrier handover according to the second aspect of embodiments is implemented.

According to an eleventh aspect of embodiments of the disclosure, a computer program is provided. When the computer program runs on a computer, the computer is caused to perform the method for carrier handover according to the first aspect of embodiments.

According to a twelfth aspect of embodiments of the disclosure, a computer program is provided. When the computer program runs on a computer, the computer is caused to perform the method for carrier handover according to the second aspect of embodiments.

The method and the apparatus for carrier handover according to embodiments of the disclosure receive the carrier handover indication; and determine, from the candidate carriers, the target carrier of the PUCCH according to the carrier handover indication; in which the carrier handover indication includes at least one of: the additional field in the DCI; the multiplexed PRI; the multiplexed HARQ feedback time indication; the multiplexed UL/SUL indication; or the multiplexed carrier indication in the DCI, so that the terminal may perform the carrier handover according to the indication, which ensures a reliability and feedback efficiency of transmitting the HARQ-ACK, reduces an interference, and enhances a load balance.

Additional aspects and advantages according to embodiments of the disclosure will be given in part in the following descriptions, become apparent in part from the following descriptions, or be learned from the practice according to the embodiments of the disclosure.

### BRIEF DESCRIPTION OF THE DRAWINGS

In order to explain technical solutions according to embodiments of the disclosure or technical solutions in the related art more clearly, the accompanying drawings described according to the embodiments of the disclosure or required in the related art will be briefly introduced below.
FIG. 1 is a diagram illustrating an architecture of a communication system according to embodiments of the disclosure.
FIG. 2 is a flowchart illustrating a method for carrier handover according to embodiments of the disclosure.
FIG. 3 is a flowchart illustrating a method for carrier handover according to embodiments of the disclosure.
FIG. 4 is a flowchart illustrating a method for carrier handover according to embodiments of the disclosure.
FIG. 5 is a flowchart illustrating a method for carrier handover according to embodiments of the disclosure.
FIG. 6 is a flowchart illustrating a method for carrier handover according to embodiments of the disclosure.
FIG. 7 is a flowchart illustrating a method for carrier handover according to embodiments of the disclosure.
FIG. 8 is a block diagram illustrating an apparatus for carrier handover according to embodiments of the disclosure.
FIG. 9 is a block diagram illustrating an apparatus for carrier handover according to embodiments of the disclosure.
FIG. 10 is a block diagram illustrating another device for carrier handover according to embodiments of the disclosure.
FIG. 11 is a block diagram illustrating a chip according to embodiments of the disclosure.

### DETAILED DESCRIPTION

Reference will now be made in detail to some embodiments of the disclosure, examples of which are illustrated in the accompanying drawings. The following descriptions refer to the accompanying drawings in which the same numbers in different drawings represent the same or similar elements unless otherwise represented. The implementations set forth in the following descriptions of some embodiments do not represent all implementations consistent with embodiments of the disclosure. Instead, they are merely examples of apparatuses and methods consistent with aspects related to the embodiments of the disclosure as recited in the appended claims.

The terms used according to the embodiments of the disclosure are only for the purpose of describing specific embodiments and are not intended to limit the embodiments of the disclosure. The singular forms of "a" and "the" used according to the embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second, and third may be used according to the embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the word "if' as used herein may be interpreted as "when", "while" or "in response to determining".

The embodiments of the disclosure are described in detail below. Examples of the embodiments are illustrated in the accompanying drawings where the same or similar numbers throughout indicate the same or similar elements. The embodiments described below by reference to the accompanying drawings are illustrative and are intended to interpret the disclosure and are not to be construed as a limitation of the disclosure.

In order to understand the method for carrier handover according to embodiments of the disclosure better, a communication system to which embodiments of the disclosure are applicable is described below.

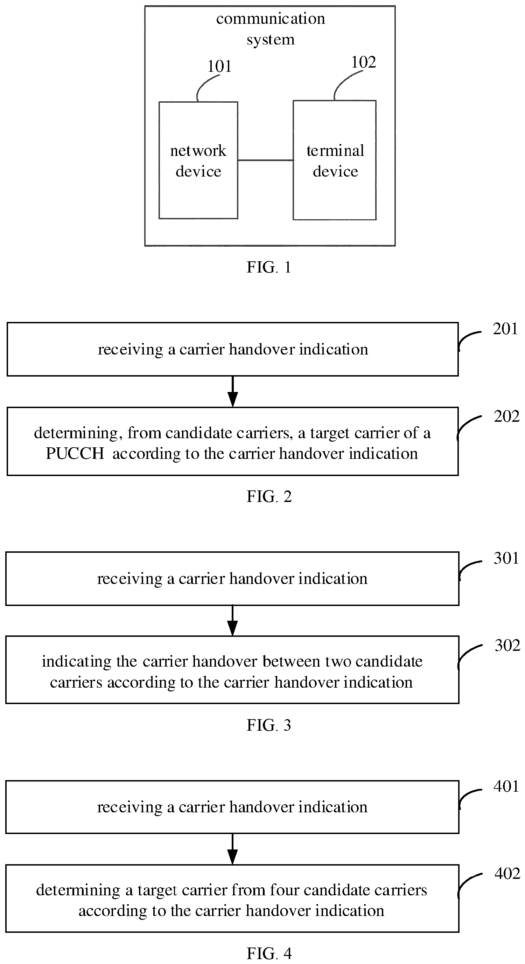

Referring to FIG. 1, FIG. 1 is a diagram illustrating an architecture of a communication system according to embodiments of the disclosure. The communication system may include, but is not limited to, a network device and a terminal device. The number and the form of each device in FIG. 1 are only for example and do not constitute a limitation to embodiments of the disclosure. Two or more network devices and two or more terminal devices may be included in practical applications. The communication system 100 as illustrated in FIG. 1 includes one network device 101 and one terminal device 102 for example.

It should be noted that technical solutions according to embodiments of the disclosure may be applicable to various communication systems. For example, a long term evolution (LTE) system, a 5th generation (5G) mobile communication system, a 5G new radio (NR) system, or other future new mobile communication systems.

The network device 101 according to embodiments of the disclosure is an entity on the network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi^{™}) system. The embodiments of the disclosure do not limit the specific technology and specific device form adopted by the network device. The network device according to embodiments of the disclosure may include a central unit (CU) and a distributed unit (DU). The CU may also be referred to as a control unit. By adopting a CU-DU structure, protocol layers of the network device such as the base station may be splitted, functions of some protocol layers are centrally controlled by the CU, functions of the remaining part or all the protocol layers are distributed in the DU, and the CU centrally controls the DU.

The terminal device 102 according to embodiments of the disclosure is an entity on the user side for transmitting or receiving signals, such as a mobile phone. The terminal device may also be referred to as a terminal, a user equipment (UE), a mobile station (MS), a mobile terminal (MT), or the like. The terminal device may be a car with a communication function, a smart car, a mobile phone, a wearable device, a tablet computer, a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, or the like. The embodiments of the disclosure do not limit the specific technology and specific device form adopted by the terminal device.

The terminal device 102 may perform a detection and correction on received data and transmit feedback information to the network device 101 according to a detection result. If the data are received correctly, the terminal device 102 transmits a hybrid automatic repeat request acknowledgment (HARQ-ACK) to the network device 101. The network device 101 may continues transmitting a next set of data after receiving the HARQ-ACK fed back by the terminal device 102.

In the related art, the network device 101 and the terminal device 102 support a dynamic PUCCH carrier handover, that is, when a PUCCH time frequency resource of a primary cell is not available, an HARQ-ACK transmission may be performed via a carrier on a PUCCH time frequency resource of a secondary cell.

According to embodiments of the disclosure, the carrier handover indication is received; and the target carrier of the PUCCH is determined from the candidate carriers according to the carrier handover indication, and the carrier handover indication includes at least one of: the additional field in the DCI; the multiplexed PRI; the multiplexed HARQ feedback time indication; the multiplexed UL/SUL indication; or the multiplexed carrier indication in the DCI, so that the terminal may perform the carrier handover according to the indication, which ensures a reliability and feedback efficiency of transmitting the HARQ-ACK, reduces an interference, and enhances a load balance.

It should be understood that the communication system described according to the embodiments of the disclosure is for the purpose of illustrating the technical solutions according to the embodiments of the disclosure more clearly and does not constitute a limitation on the technical solutions according to the embodiments of the disclosure. For those skilled in the art, with the evolution of the system architecture and the emergence of the new service scenario, the technical solutions according to the embodiments of the disclosure are also applicable to similar technical problems.

The method and the apparatus for carrier handover provided in the disclosure are described in combination with the accompanying drawings.

Referring to FIG. 2, FIG. 2 is a flowchart illustrating a method for carrier handover according to embodiments of the disclosure. It should be noted that, the method for carrier handover according to embodiments of the disclosure is performed by a terminal device. As illustrated in FIG. 2, the method may include following steps.

At step 201, a carrier handover indication is received.

The carrier handover indication includes at least one of: an additional field in a downlink control information (DCI), a multiplexed PUCCH resource indication (PRI), a multiplexed hybrid automatic repeat request (HARQ) feedback time indication, a multiplexed uplink/supplementary uplink (UL/SUL) indication, or a multiplexed carrier indication in a DCI.

It should be noted that, the PRI, the HARQ feedback time indication, the UL/SUL indication, and the carrier indication all are existing fields in the DCI format. The additional field is set according to embodiments of the disclosure and is a newly set field in the DCI.

The PRI field is 3 bits in length. The UL/SUL indication field or the carrier indication field is 1 bit in length. A value of the HARQ feedback time indication indicates how long the HARQ-ACK information needs to be transmitted after data of a physical downlink shared channel (PDSCH) are received, this field is 3 bits in length, and the range of the value of this field is { 1, 2, 3, 4, 5, 6, 7, 8 } .

According to embodiments of the disclosure, the terminal device may determine the target carrier from the candidate carriers according to the carrier handover indication, that is, at least one of the additional field in the DCI, the multiplexed PRI, the multiplexed HARQ feedback time indication, the multiplexed UL/SUL indication; or the multiplexed carrier indication in the DCI.

In some embodiments, the carrier handover indication includes the additional field in the DCI.

In some embodiments, the carrier handover indication includes the multiplexed PRI.

In some embodiments, the carrier handover indication includes the multiplexed HARQ feedback time indication.

In some embodiments, the carrier handover indication includes the multiplexed UL/SUL indication.

In some embodiments, the carrier handover indication includes a joint indication of the UL/SUL and the PRI.

In some embodiments, the carrier handover indication includes a joint indication of the HARQ feedback time and the PRI.

In some embodiments, the carrier handover indication includes a joint indication of the carrier indication in the DCI and the PRI.

It should be noted that, the joint indication means that each piece of indication information in the joint indication plays an indication role in determining the target carrier.

In addition, for the multiplexed indication information, such as the PRI, the HARQ feedback time indication, the UL/SUL indication, or the carrier indication, multiplexing validation indication information for indicating that the multiplexing is valid may be configured.

It may be understood that, the method for indicating carrier handover is exemplary, and other indication manner or other joint indication manner may be flexibly selected according to the candidate carriers and the available resources of the candidate carriers.

At step 202, a target carrier of a PUCCH is determined from candidate carriers according to the carrier handover indication.

The candidate carriers refer to carriers on PUCCH time frequency resources, which are used by the terminal device to transmit the HARQ-ACK, and the target carrier, determined according to the carrier handover indication, is a carrier on the PUCCH time frequency resources, for finally transmitting the HARQ-ACK.

Optionally, a number of the candidate carriers may be two or four.

It should be noted that, an original carrier is included in the candidate carriers. The original carrier refers to a carrier on the PUCCH time frequency resources, which the terminal device was originally intended to use to transmit the HARQ-ACK. The candidate carriers include the original carrier, and the target carrier may be the original carrier.

Optionally, after the terminal device determines the target carrier of the PUCCH from the candidate carriers according to the carrier handover indication, feedback information may be transmitted on the target carrier.

In summary, the carrier handover indication is received; and the target carrier of the PUCCH is determined from the candidate carriers according to the carrier handover indication, so that the terminal may perform the carrier handover according to the indication, which ensures the reliability and feedback efficiency of transmitting the HARQ-ACK, reduces the interference, and enhances the load balance.

Referring to FIG. 3, FIG. 3 is a flowchart illustrating a method for carrier handover according to embodiments of the disclosure. It should be noted that, the method for carrier handover according to embodiments of the disclosure is performed by a terminal device. As illustrated in FIG. 3, the method may include following steps.

At step 301, a carrier handover indication is received.

As a first possible implementation, the carrier handover indication includes an additional field in a DCI.

As a second possible implementation, the carrier handover indication includes a multiplexed PRI.

As a third possible implementation, the carrier handover indication includes a multiplexed HARQ feedback time indication.

As a fourth possible implementation, the carrier handover indication includes a multiplexed UL/SUL indication.

At step 302, the carrier handover between two candidate carriers is indicated according to the carrier handover indication.

As a first possible implementation, the carrier handover indication includes the additional field in the DCI.

Optionally, in order to save an overhead, the additional field includes 1 bit. The 1-bit additional field indicates the carrier handover between the two candidate carriers. For example, when the additional field is set to 0, it indicates handing over from the original carrier to another carrier, and when the additional field is 1, it indicates no handover, and similarly, when the additional field is set to 1, it indicates handing over from the original carrier to another carrier, and when the additional field is 0, it indicates no handover.

It may be understood that, other lengths of additional fields may be configured. For example, a 2-bit additional field is set. When the additional field is 00 or 11, it indicates handing over from the original carrier to another carrier, and when the additional field is 01 or 10, it indicates no handover.

As a second possible implementation, the carrier handover indication includes the multiplexed PRI.

Optionally, the multiplexed PRI includes 1 bit. The multiplexed 1-bit PRI indicates the carrier handover between the two candidate carriers. For example, the multiplexed 1-bit PRI is set to a highest bit among the 3 bits. When the highest bit is set to 0, it indicates handing over from the original carrier to another carrier, and when the highest bit is set to 1, it indicates no handover, and similarly, when the highest bit is set to 1, it indicates handing over from the original carrier to another carrier, and when the highest bit is set to 0, it indicates no handover.

It may be understood that, a second-highest PRI bit or a lowest PRI bit may be multiplexed, to indicate the handover between the two candidate carriers.

In addition, a 2-bit PRI may be multiplexed. When the additional field is 00 or 11, it indicates handing over from the original carrier to another carrier, and when the additional field is 10 or 11, it indicates no handover.

As a third possible implementation, the carrier handover indication includes the multiplexed HARQ feedback time indication.

As described above, the value of the HARQ feedback time indication indicates how long the HARQ-ACK information needs to be transmitted after data of the PDSCH are received. The field is 3 bits in length, and the range of the value of the field is {1, 2, 3, 4, 5, 6, 7, 8}. Therefore, the multiplexed HARQ feedback time indication indicating the carrier handover is an implicit indication.

Optionally, the multiplexed HARQ feedback time indication is a parity indication. For example, when a value of the HARQ feedback time indication is set to an odd number, it indicates handing over from the original carrier to another carrier, and when the value of the HARQ feedback time indication is set to an even number, it indicates no handover, and similarly, when the value of the HARQ feedback time indication value is set to an even number, it indicates handing over from the original carrier to another carrier, and when the value of the HARQ feedback time indication is set to an odd number, it indicates no handover.

Optionally, the multiplexed HARQ feedback time indication is a preset specific value indication. For example, when the value of the HARQ feedback time indication is selected from { 1, 2}, it indicates handing over from the original carrier to another carrier, and when the value of the HARQ feedback time indication is selected from {3, 4, 5, 6, 7, 8}, it indicates no handover. It may be understood that, setting of the preset specific value may be changed and flexibly configured according to scenarios and requirements.

As a fourth possible implementation, the carrier handover indication includes the multiplexed UL/SUL indication.

Optionally, when the UL/SUL indication is set to 0, it indicates handing over from the original carrier to another carrier, and when the UL/SUL indication is set to 1, it indicates no handover, and similarly, when the UL/SUL indication is set to 1, it indicates handing over from the original carrier to another carrier, and when the UL/SUL indication is set to 0, it indicates no handover.

It should be noted that, according to embodiments of the disclosure, the available PUCCH time frequency resources of the candidate carriers may be preset, and when the carrier handover is performed according to the carrier handover indication, an available PUCCH time frequency resource of the target carrier may be determined.

In addition, it should be noted that, according to embodiments of the disclosure, for the multiplexed PRI, HARQ feedback time indication, or UL/SUL indication, multiplexing validation indication information for indicating that the multiplexing is valid may be configured.

In summary, the carrier handover indication is received; and the carrier handover between two candidate carriers is indicated according to the carrier handover indication, so that the terminal may perform the carrier handover according to the indication, which ensures the reliability and feedback efficiency of transmitting the HARQ-ACK, reduces the interference, and enhances the load balance.

Referring to FIG. 4, FIG. 4 is a flowchart illustrating a method for carrier handover according to embodiments of the disclosure. It should be noted that, the method for carrier handover according to embodiments of the disclosure is performed by a terminal device. As illustrated in FIG. 4, the method may include following steps.

At step 401, a carrier handover indication is received.

As a first possible implementation, the carrier handover indication includes an additional field in a DCI.

As a second possible implementation, the carrier handover indication includes a multiplexed PRI. The multiplexed PRI includes 1-bit first indication information and 2-bit second indication information.

As a third possible implementation, the carrier handover indication includes a multiplexed PRI. The multiplexed PRI includes 2-bit first indication information and 1-bit second indication information.

As a fourth possible implementation, the carrier handover indication includes a multiplexed PRI. The PRI includes third indication information.

As a fifth possible implementation, the carrier handover indication includes a joint indication of the UL/SUL and the PRI.

As a sixth possible implementation, the carrier handover indication includes a joint indication of the carrier indication in the DCI and the PRI.

As a seventh possible implementation, the carrier handover indication includes a joint indication of the HARQ feedback time and the PRI.

At step 402, a target carrier is determined from four candidate carriers according to the carrier handover indication.

As a first possible implementation, the carrier handover indication includes the additional field in the DCI.

Optionally, in order to save an overhead, the additional field includes 2 bits. The 2-bit additional field indicates a carrier index of the target carrier, and the target carrier is determined from the four candidate carriers. For example, when the additional field is set to 00, it indicates that the carrier index of the target carrier is 1, that is, the target carrier is CC1; when the additional field is set to 01, it indicates that the carrier index of the target carrier is 2, that is, the target carrier is CC2; when the additional field is set to 10, it indicates that the carrier index of the target carrier is 3, that is, the target carrier is CC3; and when the additional field is set to 11, it indicates that the carrier index of the target carrier is 4, that is, the target carrier is CC4.

It may be understood that, the length of the additional field is greater than 2 bits, and the carrier index of the indicated target carrier is determined according to the indication of the additional field.

As a second possible implementation, the carrier handover indication includes the multiplexed PRI. The multiplexed PRI includes 1-bit first indication information and 2-bit second indication information.

As described above, the PRI field is 3 bits in length.

Optionally, the first indication information is a highest bit in the 3 bits, and the second indication information is a second highest bit and a lowest bit in the 3 bits.

It may be understood that, the first indication information may be set to the lowest bit in the 3 bits, and the second indication information may be set to the highest bit and the second highest bit in the 3 bits.

The first indication information is configured to indicate a candidate carrier subset where the target carrier is located, and the second indication information is configured to indicate an available PUCCH time frequency resource of the target carrier. The four carriers may be divided into two candidate carrier subsets, and each subset has two candidate carriers.

Further, the second indication information indicates a resource index of the PUCCH time frequency resource.

For example, there are two candidate carriers of 1 and 2 in a first subset, that is, set1={CC1, CC2}, and there are two candidate carriers of 3 and 4 in a second subset, that is, set2={CC3, CC4}. There are maximum no more than 4 available PUCCH time frequency resources in total on two candidate carriers in each candidate carrier subset. For example, the available PUCCH time frequency resources of the candidate carriers in the first subset are set to {CC1 PUCCH resource0, CC2 PUCCH resource1, CC2 PUCCH resource2, CC2 PUCCH resource3}, in which the PUCCH resource indicates the PUCCH time frequency resource, and 0, 1, 2, 3 behind the resource are resource indexes. When the first indication information is set to 0, it indicates that the candidate carrier subset where the target carrier is located is set1, and when the first indication information is set to 1, it indicates that the candidate carrier subset where the target carrier is located is set2, and similarly, when the first indication information is set to 1, it indicates that the candidate carrier subset where the target carrier is located is set1, and when the first indication information is set to 0, it indicates that the candidate carrier subset where the target carrier is located is set2. When the second indication information is set to 00, it indicates that the resource index is 0, that is, PUCCH resource0 on the target carrier CC1; when the second indication information is 01, it indicates that the resource index is 1, that is, PUCCH resource 1 on the target carrier CC2; when the second indication information is 10, it indicates that the resource index is 2, that is, PUCCH resource2 on the target carrier CC2; and when the second indication information is 11, it indicates that the resource index is 3, that is, PUCCH resource3 on the target carrier CC2.

It should be noted that, the available PUCCH time frequency resources of the candidate carriers in each candidate carrier subset may be preset. When there are maximum no more than 4 available PUCCH time frequency resources in total on the two candidate carriers in each candidate carrier subset, the available time frequency resources of the candidate carriers may be flexibly adjusted and configured according to scenarios and requirements.

As a third possible implementation, the carrier handover indication includes the multiplexed PRI. The multiplexed PRI includes 2-bit first indication information and 1-bit second indication information.

Optionally, the first indication information is a highest bit and a second highest bit in the 3 bits, and the second indication information is a lowest bit in the 3 bits.

It may be understood that, the first indication information may be set to the second highest bit and the lowest bit in the 3 bits, and the second indication information may be set to the highest bit in the 3 bits.

The first indication information is configured to indicate a carrier index of the target carrier, and the second indication information is configured to indicate an available PUCCH time frequency resource of the target carrier.

It should be noted that, there are maximum no more than 2 available PUCCH time frequency resources on each candidate carrier.

For example, when the first indication information is set to 00, it indicates that the carrier index of the target carrier is 1, that is, the target carrier is CC 1; when the first indication information is set to 01, it indicates that the carrier index of the target carrier is 2, that is, the target carrier is CC2; when the first indication information is set to 10, it indicates that the carrier index of the target carrier is 3, that is, the target carrier is CC3; and when the first indication information is set to 11, it indicates that the carrier index of the target carrier is 4, that is, the target carrier is CC4. When the second indication information is set to 0, it indicates that the available time frequency resource of the target carrier is PUCCH resource0, and when the second indication information is set to 1, it indicates that the available time frequency resource of the target carrier is PUCCH resource1. It may be understood that, the PUCCH resource0 corresponding to different carriers may be same or different.

It should be noted that, the available PUCCH time frequency resources of each candidate carrier may be preset. When there are maximum no more than 2 available PUCCH time frequency resources in total on each candidate carrier, the available time frequency resources of the candidate carrier may be flexibly adjusted and configured according to scenarios and requirements.

As a fourth possible implementation, the carrier handover indication includes the multiplexed PRI. The PRI includes third indication information.

Optionally, the third indication information includes 3 bits.

The third indication information is configured to indicate the target carrier and a corresponding PUCCH time frequency resource.

It should be noted that, there are maximum no more than 8 available PUCCH time frequency resources in total on four candidate carriers. The four candidate carriers and the available PUCCH time frequency resources may constitute a new carrier-resource set, for example, {CC1 resource0, CC2 resource1, CC2 resource2, CC2 resources, CC3 resource4, CC3 resources, CC3 resources6, CC4 resource7}.

The third indication information is configured to indicate the target carrier and the PUCCH time frequency resource corresponding to the target carrier. For example, when the third indication information is set to 000, it indicates that the target carrier is CC1, and the corresponding PUCCH time frequency resource is resource0; when the third indication information is set to 001, it indicates that the target carrier is CC2, and the corresponding PUCCH time frequency resource is resource1; when the third indication information is set to 010, it indicates that the target carrier is CC2, and the corresponding PUCCH time frequency resource is resource2; when the third indication information is set to 011, it indicates that the target carrier is CC2, and the corresponding PUCCH time frequency resource is resource3; when the third indication information is set to 100, it indicates that the target carrier is CC3, and the corresponding PUCCH time frequency resource is resource4; when the third indication information is set to 101, it indicates that the target carrier is CC3, and the corresponding PUCCH time frequency resource is resource5; when the third indication information is set to 110, it indicates that the target carrier is CC3, and the corresponding PUCCH time frequency resource is resource6; and when the third indication information is set to 111, it indicates that the target carrier is CC4, and the corresponding PUCCH time frequency resource is resource7.

It should be noted that, the candidate carriers and the available PUCCH time frequency resources may be preset. When there are maximum no more than 8 available PUCCH time frequency resources in total on the four candidate carriers, the available time frequency resources of the candidate carriers may be flexibly adjusted and configured according to scenarios and requirements.

As a fifth possible implementation, the carrier handover indication includes a joint indication of the UL/SUL and the PRI.

The UL/SUL indication is configured to indicate a candidate carrier subset where the target carrier is located, and the PRI is configured to indicate a target PUCCH time frequency resource in a time frequency resource set corresponding to the candidate carrier subset.

The four carriers may be divided into two candidate carrier subsets, and each subset has two candidate carriers.

It should be noted that, there are maximum no more than 8 PUCCH time frequency resources in total in a time frequency resource set corresponding to each candidate carrier subset.

For example, there are two candidate carriers of 1 and 2 in the first subset, that is, set1={CC1, CC2}, and there are two candidate carriers of 3 and 4 in the second subset, that is, set2={CC3, CC4}. There are maximum no more than 8 available PUCCH time frequency resources in total in the time frequency resource set corresponding to each candidate carrier subset. For example, the available PUCCH time frequency resources of the candidate carriers in the first subset are set to {CC1 resource0, CC1 resource 1, CC2 resource2, CC2 resources, CC2 resource4, CC2 resources, CC2 resources6, CC2 resource7}. When the UL/SUL indication is set to 0, it indicates that the candidate carrier subset where the target carrier is located is set1, and when the UL/SUL indication is set to 1, it indicates that the candidate carrier subset where the target carrier is located is set2, and similarly, when the UL/SUL indication is set to 1, it indicates that the candidate carrier subset where the target carrier is located is set1, and when the UL/SUL indication is set to 0, it indicates that the candidate carrier subset where the target carrier is located is set2. When the PRI is set to 000, it indicates that the target PUCCH time frequency resource is resource0; when the PRI is set to 001, it indicates that the target PUCCH time frequency resource is resource1; when the PRI is set to 010, it indicates that the target PUCCH time frequency resource is resource2; when the PRI is set to 011, it indicates that the target PUCCH time frequency resource is resource3; when the PRI is set to 100, it indicates that the target PUCCH time frequency resource is resource4; when the PRI is set to 101, it indicates that the target PUCCH time frequency resource is resource5; when the PRI is set to 110, it indicates that the target PUCCH time frequency resource is resource6; and when the PRI is set to 111, it indicates that the target PUCCH time frequency resource is resource7.

It should be noted that, the available PUCCH time frequency resources of the candidate carriers in each candidate carrier subset may be preset. When there are maximum no more than 8 available PUCCH time frequency resources in total on the two candidate carriers in each candidate carrier subset, the available time frequency resources of the candidate carriers may be flexibly adjusted and configured according to scenarios and requirements.

As a sixth possible implementation, the carrier handover indication includes a joint indication of the carrier indication in the DCI and the PRI.

The carrier indication is configured to indicate a carrier index of the target carrier, and the PRI is configured to indicate a target PUCCH time frequency resource in a time frequency resource set corresponding to the target carrier.

It should be noted that, there are maximum no more than 8 PUCCH time frequency resources in total in a time frequency resource set corresponding to the target carrier.

For example, when the carrier indication is set to 00, it indicates that the carrier index of the target carrier is 1, that is, the target carrier is CC1; when the carrier indication is set to 01, it indicates that the carrier index of the target carrier is 2, that is, the target carrier is CC2; when the carrier indication is set to 10, it indicates that the carrier index of the target carrier is 3, that is, the target carrier is CC3; and when the carrier indication is set to 11, it indicates that the carrier index of the target carrier is 4, that is, the target carrier is CC4. When the PRI is set to 000, it indicates that the target PUCCH time frequency resource is resource0; when the PRI is set to 001, it indicates that the target PUCCH time frequency resource is resource1; when the PRI is set to 010, it indicates that the target PUCCH time frequency resource is resource2; when the PRI is set to 011, it indicates that the target PUCCH time frequency resource is resource3; when the PRI is set to 100, it indicates that the target PUCCH time frequency resource is resource4; when the PRI is set to 101, it indicates that the target PUCCH time frequency resource is resource5; when the PRI is set to 110, it indicates that the target PUCCH time frequency resource is resource6; and when the PRI is set to 111, it indicates that the target PUCCH time frequency resource is resource7.

It should be noted that, the available PUCCH time frequency resources of each candidate carrier may be preset. When there are maximum no more than 8 available PUCCH time frequency resources on each candidate carrier, the available time frequency resources of the candidate carrier may be flexibly adjusted and configured according to scenarios and requirements.

As a seventh possible implementation, the carrier handover indication includes a joint indication of the HARQ feedback time and the PRI.

The HARQ feedback time indication is configured to implicitly indicate a candidate carrier subset where the target carrier is located, and the PRI is configured to indicate a target PUCCH time frequency resource in a time frequency resource set corresponding to the candidate carrier subset.

The four carriers may be divided into two candidate carrier subsets, and each subset has two candidate carriers. For example, there are two candidate carriers of 1 and 2 in the first subset, that is, set1={CC1, CC2}, and there are two candidate carriers of 3 and 4 in the second subset, that is, set2={CC3, CC4}.

Optionally, the multiplexed HARQ feedback time indication is a parity indication. For example, when the value of the HARQ feedback time indication is set to an odd number, it indicates that the candidate carrier subset where the target carrier is located is set1, and when the value of the HARQ feedback time indication is set to an even number, it indicates that the candidate carrier subset where the target carrier is located is set2, and similarly, when the value of the HARQ feedback time indication is set to an even number, it indicates that the candidate carrier subset where the target carrier is located is set1, and when the value of the HARQ feedback time indication is set to an odd number, it indicates that the candidate carrier subset where the target carrier is located is set2.

Optionally, the multiplexed HARQ feedback time indication is a preset specific value indication. For example, when the value of the HARQ feedback time indication is selected from {1, 2}, it indicates the candidate carrier subset where the target carrier is located is set1, and when the value of the HARQ feedback time indication is selected from {3, 4, 5, 6, 7, 8}, it indicates the candidate carrier subset where the target carrier is located is set2. It may be understood that, setting of the preset specific value may be flexibly configured according to scenarios and requirements.

It should be noted that, there are no more than 8 available PUCCH time frequency resources in total in the time frequency resource set corresponding to each candidate carrier subset. For example, the available PUCCH time frequency resources of the candidate carriers in the first subset are set to {CC1 resource0, CC1 resource 1, CC2 resource2, CC2 resources, CC2 resource4, CC2 resources, CC2 resources6, CC2 resource7}.

For example, when the PRI is set to 000, it indicates that the target PUCCH time frequency resource is resource0; when the PRI is set to 001, it indicates that the target PUCCH time frequency resource is resource1; when the PRI is set to 010, it indicates that the target PUCCH time frequency resource is resource2; when the PRI is set to 011, it indicates that the target PUCCH time frequency resource is resource3; when the PRI is set to 100, it indicates that the target PUCCH time frequency resource is resource4; when the PRI is set to 101, it indicates that the target PUCCH time frequency resource is resource5; when the PRI is set to 110, it indicates that the target PUCCH time frequency resource is resource6; and when the PRI is set to 111, it indicates that the target PUCCH time frequency resource is resource7.

It should be noted that, the available PUCCH time frequency resources of each candidate carrier may be preset. When there are maximum no more than 8 available PUCCH time frequency resources on each candidate carrier, the available time frequency resources of the candidate carrier may be flexibly adjusted and configured according to scenarios and requirements.

It may be understood that, according to embodiments of the disclosure, a size of granularity of the PUCCH time-frequency resources may be flexibly adjusted and configured according to scenarios and requirements.

In addition, it should be noted that, according to embodiments of the disclosure, for the multiplexed PRI, HARQ feedback time indication, UL/SUL indication, and carrier indication, multiplexing validation indication information for indicating that the multiplexing is valid may be configured.

In summary, the carrier handover indication is received; and the target carrier is determined from the four candidate carriers according to the carrier handover indication, so that the terminal may perform the carrier handover according to the indication, which ensures the reliability and feedback efficiency of transmitting the HARQ-ACK, reduces the interference, and enhances the load balance.

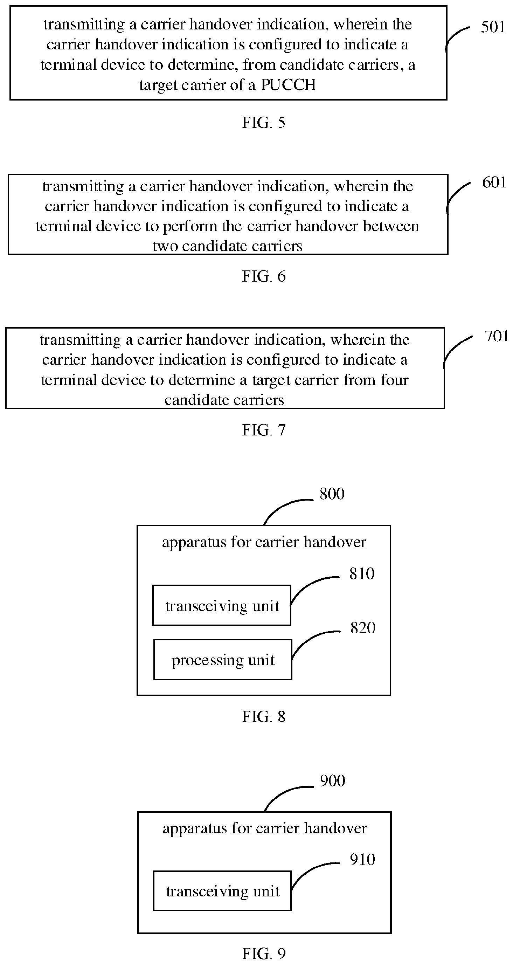

Referring to FIG. 5, FIG. 5 is a flowchart illustrating a method for carrier handover according to embodiments of the disclosure. It should be noted that, the method for carrier handover according to embodiments of the disclosure is performed by a network device. As illustrated in FIG. 5, the method may include following steps.

At step 501, a carrier handover indication is transmitted. The carrier handover indication is configured to indicate a terminal device to determine, from candidate carriers, a target carrier of a PUCCH.

The carrier handover indication includes at least one of: an additional field in a DCI; a multiplexed PRI; a multiplexed HARQ feedback time indication; a multiplexed UL/SUL indication; or a multiplexed carrier indication in a DCI.

It should be noted that, the PRI, the HARQ feedback time indication, the UL/SUL indication, and the carrier indication all are existing fields in the DCI format. The additional field is set according to embodiments of the disclosure and is a newly set field in the DCI.

The PRI field is 3 bits in length. The UL/SUL indication field or the carrier indication field is 1 bit in length. A value of the HARQ feedback time indication indicates how long the HARQ-ACK information needs to be transmitted after data of a physical downlink shared channel (PDSCH) are received, this field is 3 bits in length, and the range of the value of this field is { 1, 2, 3, 4, 5, 6, 7, 8 } .

According to embodiments of the disclosure, the terminal device may determine the target carrier from the candidate carriers according to the carrier handover indication, that is, at least one of the additional field in the DCI, the multiplexed PRI, the multiplexed HARQ feedback time indication, the multiplexed UL/SUL indication; or the multiplexed carrier indication in the DCI.

In some embodiments, the carrier handover indication includes the additional field in the DCI.

In some embodiments, the carrier handover indication includes the multiplexed PRI.

In some embodiments, the carrier handover indication includes the multiplexed HARQ feedback time indication.

In some embodiments, the carrier handover indication includes the multiplexed UL/SUL indication.

In some embodiments, the carrier handover indication includes a joint indication of the UL/SUL and the PRI.

In some embodiments, the carrier handover indication includes a joint indication of the HARQ feedback time and the PRI.

In some embodiments, the carrier handover indication includes a joint indication of the carrier indication in the DCI and the PRI.

It should be noted that, the joint indication means that each piece of indication information in the joint indication plays an indication role in determining the target carrier.

In addition, for the multiplexed indication, such as the PRI, the HARQ feedback time indication, the UL/SUL indication, or the carrier indication, multiplexing validation indication information for indicating that the multiplexing is valid may be transmitted.

It may be understood that, the method for indicating carrier handover is exemplary, and other indication manner or other joint indication manner may be flexibly selected according to the candidate carriers and the available resources of the candidate carriers.

The candidate carriers refer to carriers on PUCCH time frequency resources, which are used by the terminal device to transmit the HARQ-ACK, and the target carrier, determined according to the carrier handover indication, is a carrier on the PUCCH time frequency resources, for finally transmitting the HARQ-ACK.

Optionally, a number of the candidate carriers may be two or four.

It should be noted that, an original carrier is included in the candidate carriers. The original carrier refers to a carrier on the PUCCH time frequency resources, which the terminal device was originally intended to use to transmit the HARQ-ACK. The candidate carriers include the original carrier, and the target carrier may be the original carrier.

Optionally, after the terminal device determines the target carrier of the PUCCH from the candidate carriers according to the carrier handover indication, feedback information may be transmitted on the target carrier.

In summary, the carrier handover indication is transmitted, and the carrier handover indication is configured to indicate the terminal device to determine the target carrier of the PUCCH from the candidate carriers according to the carrier handover indication, so that the terminal device may perform the carrier handover according to the indication, which ensures the reliability and feedback efficiency of transmitting the HARQ-ACK, reduces the interference, and enhances the load balance.

Referring to FIG. 6, FIG. 6 is a flowchart illustrating a method for carrier handover according to embodiments of the disclosure. It should be noted that, the method for carrier handover according to embodiments of the disclosure is performed by a network device. As illustrated in FIG. 6, the method may include following steps.

At step 601, a carrier handover indication is transmitted. The carrier handover indication is configured to indicate the carrier handover between two candidate carriers for the terminal device.

As a first possible implementation, the carrier handover indication includes the additional field in the DCI.

Optionally, in order to save an overhead, the additional field includes 1 bit. The 1-bit additional field indicates the carrier handover between the two candidate carriers. For example, when the additional field is set to 0, it indicates handing over from the original carrier to another carrier, and when the additional field is 1, it indicates no handover, and similarly, when the additional field is set to 1, it indicates handing over from the original carrier to another carrier, and when the additional field is 0, it indicates no handover.

It may be understood that, other lengths of additional fields may be configured. For example, a 2-bit additional field is set. When the additional field is 00 or 11, it indicates handing over from the original carrier to another carrier, and when the additional field is 01 or 10, it indicates no handover.

As a second possible implementation, the carrier handover indication includes the multiplexed PRI.

Optionally, the multiplexed PRI includes 1 bit. The multiplexed 1-bit PRI indicates the carrier handover between the two candidate carriers. For example, the multiplexed 1-bit PRI is set to a highest bit among the 3 bits. When the highest bit is set to 0, it indicates handing over from the original carrier to another carrier, and when the highest bit is set to 1, it indicates no handover, and similarly, when the highest bit is set to 1, it indicates handing over from the original carrier to another carrier, and when the highest bit is set to 0, it indicates no handover.

It may be understood that, a second-highest PRI bit or a lowest PRI bit may be multiplexed, to indicate the handover between the two candidate carriers.

In addition, a 2-bit PRI may be multiplexed. When the additional field is 00 or 11, it indicates handing over from the original carrier to another carrier, and when the additional field is 10 or 11, it indicates no handover.

As a third possible implementation, the carrier handover indication includes the multiplexed HARQ feedback time indication.

As described above, the value of the HARQ feedback time indication indicates how long the HARQ-ACK information needs to be transmitted after data of the PDSCH are received. The field is 3 bits in length, and the range of the value of the field is {1, 2, 3, 4, 5, 6, 7, 8}. Therefore, the multiplexed HARQ feedback time indication indicating the carrier handover is an implicit indication.

Optionally, the multiplexed HARQ feedback time indication is a parity indication. For example, when a value of the HARQ feedback time indication is set to an odd number, it indicates handing over from the original carrier to another carrier, and when the value of the HARQ feedback time indication is set to an even number, it indicates no handover, and similarly, when the value of the HARQ feedback time indication value is set to an even number, it indicates handing over from the original carrier to another carrier, and when the value of the HARQ feedback time indication is set to an odd number, it indicates no handover.

Optionally, the multiplexed HARQ feedback time indication is a preset specific value indication. For example, when the value of the HARQ feedback time indication is selected from {1, 2}, it indicates handing over from the original carrier to another carrier, and when the value of the HARQ feedback time indication is selected from {3, 4, 5, 6, 7, 8}, it indicates no handover. It may be understood that, setting of the preset specific value may be changed and flexibly configured according to scenarios and requirements.

As a fourth possible implementation, the carrier handover indication includes the multiplexed UL/SUL indication.

Optionally, when the UL/SUL indication is set to 0, it indicates handing over from the original carrier to another carrier, and when the UL/SUL indication is set to 1, it indicates no handover, and similarly, when the UL/SUL indication is set to 1, it indicates handing over from the original carrier to another carrier, and when the UL/SUL indication is set to 0, it indicates no handover.

It should be noted that, according to embodiments of the disclosure, the available PUCCH time frequency resources of the candidate carriers may be preset, and when the carrier handover is performed according to the carrier handover indication, an available PUCCH time frequency resource of the target carrier may be determined.

In addition, it should be noted that, according to embodiments of the disclosure, for the multiplexed PRI, HARQ feedback time indication, or UL/SUL indication, multiplexing validation indication information for indicating that the multiplexing is valid may transmitted.

In summary, the carrier handover indication is transmitted, and the carrier handover indication is configured to indicate the terminal device to perform the carrier handover between the two candidate carriers, so that the terminal may perform the carrier handover according to the indication, which ensures the reliability and feedback efficiency of transmitting the HARQ-ACK, reduces the interference, and enhances the load balance.

Referring to FIG. 7, FIG. 7 is a flowchart illustrating a method for carrier handover according to embodiments of the disclosure. It should be noted that, the method for carrier handover according to embodiments of the disclosure is performed by a network device. As illustrated in FIG. 7, the method may include following steps.

At step 701, a carrier handover indication is sent. The carrier handover indication is configured to indicate a terminal device to determine a target carrier from four candidate carriers.

As a first possible implementation, the carrier handover indication includes the additional field in the DCI.

Optionally, in order to save an overhead, the additional field includes 2 bits. The 2-bit additional field indicates a carrier index of the target carrier, and the target carrier is determined from the four candidate carriers. For example, when the additional field is set to 00, it indicates that the carrier index of the target carrier is 1, that is, the target carrier is CC1; when the additional field is set to 01, it indicates that the carrier index of the target carrier is 2, that is, the target carrier is CC2; when the additional field is set to 10, it indicates that the carrier index of the target carrier is 3, that is, the target carrier is CC3; and when the additional field is set to 11, it indicates that the carrier index of the target carrier is 4, that is, the target carrier is CC4.

It may be understood that, the length of the additional field is greater than 2 bits, and the carrier index of the indicated target carrier is determined according to the indication of the additional field.

As a second possible implementation, the carrier handover indication includes the multiplexed PRI. The multiplexed PRI includes 1-bit first indication information and 2-bit second indication information.

As described above, the PRI field is 3 bits in length.

Optionally, the first indication information is a highest bit in the 3 bits, and the second indication information is a second highest bit and a lowest bit in the 3 bits.

It may be understood that, the first indication information may be set to the lowest bit in the 3 bits, and the second indication information may be set to the highest bit and the second highest bit in the 3 bits.

The first indication information is configured to indicate a candidate carrier subset where the target carrier is located, and the second indication information is configured to indicate an available PUCCH time frequency resource of the target carrier. The four carriers may be divided into two candidate carrier subsets, and each subset has two candidate carriers.

Further, the second indication information indicates a resource index of the PUCCH time frequency resource.

For example, there are two candidate carriers of 1 and 2 in a first subset, that is, set1={CC1, CC2}, and there are two candidate carriers of 3 and 4 in a second subset, that is, set2={CC3, CC4}. There are maximum no more than 4 available PUCCH time frequency resources in total on two candidate carriers in each candidate carrier subset. For example, the available PUCCH time frequency resources of the candidate carriers in the first subset are set to {CC1 PUCCH resource0, CC2 PUCCH resource1, CC2 PUCCH resource2, CC2 PUCCH resource3}, in which the PUCCH resource indicates the PUCCH time frequency resource, and 0, 1, 2, 3 behind the resource are resource indexes. When the first indication information is set to 0, it indicates that the candidate carrier subset where the target carrier is located is set1, and when the first indication information is set to 1, it indicates that the candidate carrier subset where the target carrier is located is set2, and similarly, when the first indication information is set to 1, it indicates that the candidate carrier subset where the target carrier is located is set1, and when the first indication information is set to 0, it indicates that the candidate carrier subset where the target carrier is located is set2. When the second indication information is set to 00, it indicates that the resource index is 0, that is, PUCCH resource0 on the target carrier CC1; when the second indication information is 01, it indicates that the resource index is 1, that is, PUCCH resource1 on the target carrier CC2; when the second indication information is 10, it indicates that the resource index is 2, that is, PUCCH resource2 on the target carrier CC2; and when the second indication information is 11, it indicates that the resource index is 3, that is, PUCCH resource3 on the target carrier CC2.

It should be noted that, the available PUCCH time frequency resources of the candidate carriers in each candidate carrier subset may be preset. When there are maximum no more than 4 available PUCCH time frequency resources in total on the two candidate carriers in each candidate carrier subset, the available time frequency resources of the candidate carriers may be flexibly adjusted and configured according to scenarios and requirements.

As a third possible implementation, the carrier handover indication includes the multiplexed PRI. The multiplexed PRI includes 2-bit first indication information and 1-bit second indication information.

Optionally, the first indication information is a highest bit and a second highest bit in the 3 bits, and the second indication information is a lowest bit in the 3 bits.

It may be understood that, the first indication information may be set to the second highest bit and the lowest bit in the 3 bits, and the second indication information may be set to the highest bit in the 3 bits.

The first indication information is configured to indicate a carrier index of the target carrier, and the second indication information is configured to indicate an available PUCCH time frequency resource of the target carrier.

It should be noted that, there are maximum no more than 2 available PUCCH time frequency resources on each candidate carrier.

For example, when the first indication information is set to 00, it indicates that the carrier index of the target carrier is 1, that is, the target carrier is CC 1; when the first indication information is set to 01, it indicates that the carrier index of the target carrier is 2, that is, the target carrier is CC2; when the first indication information is set to 10, it indicates that the carrier index of the target carrier is 3, that is, the target carrier is CC3; and when the first indication information is set to 11, it indicates that the carrier index of the target carrier is 4, that is, the target carrier is CC4. When the second indication information is set to 0, it indicates that the available time frequency resource of the target carrier is PUCCH resource0, and when the second indication information is set to 1, it indicates that the available time frequency resource of the target carrier is PUCCH resource1. It may be understood that, the PUCCH resource0 corresponding to different carriers may be same or different.

It should be noted that, the available PUCCH time frequency resources of each candidate carrier may be preset. When there are maximum no more than 2 available PUCCH time frequency resources in total on each candidate carrier, the available time frequency resources of the candidate carrier may be flexibly adjusted and configured according to scenarios and requirements.

As a fourth possible implementation, the carrier handover indication includes the multiplexed PRI. The PRI includes third indication information.

Optionally, the third indication information includes 3 bits.

The third indication information is configured to indicate the target carrier and a corresponding PUCCH time frequency resource.

It should be noted that, there are maximum no more than 8 available PUCCH time frequency resources in total on four candidate carriers. The four candidate carriers and the available PUCCH time frequency resources may constitute a new carrier-resource set, for example, {CC1 resource0, CC2 resource1, CC2 resource2, CC2 resources, CC3 resource4, CC3 resources, CC3 resources6, CC4 resource7}.

The third indication information is configured to indicate the target carrier and the PUCCH time frequency resource corresponding to the target carrier. For example, when the third indication information is set to 000, it indicates that the target carrier is CC1, and the corresponding PUCCH time frequency resource is resource0; when the third indication information is set to 001, it indicates that the target carrier is CC2, and the corresponding PUCCH time frequency resource is resource1; when the third indication information is set to 010, it indicates that the target carrier is CC2, and the corresponding PUCCH time frequency resource is resource2; when the third indication information is set to 011, it indicates that the target carrier is CC2, and the corresponding PUCCH time frequency resource is resource3; when the third indication information is set to 100, it indicates that the target carrier is CC3, and the corresponding PUCCH time frequency resource is resource4; when the third indication information is set to 101, it indicates that the target carrier is CC3, and the corresponding PUCCH time frequency resource is resource5; when the third indication information is set to 110, it indicates that the target carrier is CC3, and the corresponding PUCCH time frequency resource is resource6; and when the third indication information is set to 111, it indicates that the target carrier is CC4, and the corresponding PUCCH time frequency resource is resource7.

It should be noted that, the candidate carriers and the available PUCCH time frequency resources may be preset. When there are maximum no more than 8 available PUCCH time frequency resources in total on the four candidate carriers, the available time frequency resources of the candidate carriers may be flexibly adjusted and configured according to scenarios and requirements.

As a fifth possible implementation, the carrier handover indication includes a joint indication of the UL/SUL and the PRI.

The UL/SUL indication is configured to indicate a candidate carrier subset where the target carrier is located, and the PRI is configured to indicate a target PUCCH time frequency resource in a time frequency resource set corresponding to the candidate carrier subset.

The four carriers may be divided into two candidate carrier subsets, and each subset has two candidate carriers.

It should be noted that, there are maximum no more than 8 PUCCH time frequency resources in total in a time frequency resource set corresponding to each candidate carrier subset.

For example, there are two candidate carriers of 1 and 2 in the first subset, that is, set1={CC1, CC2}, and there are two candidate carriers of 3 and 4 in the second subset, that is, set2={CC3, CC4}. There are maximum no more than 8 available PUCCH time frequency resources in total in the time frequency resource set corresponding to each candidate carrier subset. For example, the available PUCCH time frequency resources of the candidate carriers in the first subset are set to {CC1 resource0, CC1 resource 1, CC2 resource2, CC2 resource3, CC2 resource4, CC2 resources, CC2 resources6, CC2 resource7}. When the UL/SUL indication is set to 0, it indicates that the candidate carrier subset where the target carrier is located is set1, and when the UL/SUL indication is set to 1, it indicates that the candidate carrier subset where the target carrier is located is set2, and similarly, when the UL/SUL indication is set to 1, it indicates that the candidate carrier subset where the target carrier is located is set1, and when the UL/SUL indication is set to 0, it indicates that the candidate carrier subset where the target carrier is located is set2. When the PRI is set to 000, it indicates that the target PUCCH time frequency resource is resource0; when the PRI is set to 001, it indicates that the target PUCCH time frequency resource is resource1; when the PRI is set to 010, it indicates that the target PUCCH time frequency resource is resource2; when the PRI is set to 011, it indicates that the target PUCCH time frequency resource is resource3; when the PRI is set to 100, it indicates that the target PUCCH time frequency resource is resource4; when the PRI is set to 101, it indicates that the target PUCCH time frequency resource is resource5; when the PRI is set to 110, it indicates that the target PUCCH time frequency resource is resource6; and when the PRI is set to 111, it indicates that the target PUCCH time frequency resource is resource7.

It should be noted that, the available PUCCH time frequency resources of the candidate carriers in each candidate carrier subset may be preset. When there are maximum no more than 8 available PUCCH time frequency resources in total on the two candidate carriers in each candidate carrier subset, the available time frequency resources of the candidate carriers may be flexibly adjusted and configured according to scenarios and requirements.

As a sixth possible implementation, the carrier handover indication includes a joint indication of the carrier indication in the DCI and the PRI.

The carrier indication is configured to indicate a carrier index of the target carrier, and the PRI is configured to indicate a target PUCCH time frequency resource in a time frequency resource set corresponding to the target carrier.

It should be noted that, there are maximum no more than 8 PUCCH time frequency resources in total in a time frequency resource set corresponding to the target carrier.

For example, when the carrier indication is set to 00, it indicates that the carrier index of the target carrier is 1, that is, the target carrier is CC1; when the carrier indication is set to 01, it indicates that the carrier index of the target carrier is 2, that is, the target carrier is CC2; when the carrier indication is set to 10, it indicates that the carrier index of the target carrier is 3, that is, the target carrier is CC3; and when the carrier indication is set to 11, it indicates that the carrier index of the target carrier is 4, that is, the target carrier is CC4. When the PRI is set to 000, it indicates that the target PUCCH time frequency resource is resource0; when the PRI is set to 001, it indicates that the target PUCCH time frequency resource is resource1; when the PRI is set to 010, it indicates that the target PUCCH time frequency resource is resource2; when the PRI is set to 011, it indicates that the target PUCCH time frequency resource is resource3; when the PRI is set to 100, it indicates that the target PUCCH time frequency resource is resource4; when the PRI is set to 101, it indicates that the target PUCCH time frequency resource is resource5; when the PRI is set to 110, it indicates that the target PUCCH time frequency resource is resource6; and when the PRI is set to 111, it indicates that the target PUCCH time frequency resource is resource7.

It should be noted that, the available PUCCH time frequency resources of each candidate carrier may be preset. When there are maximum no more than 8 available PUCCH time frequency resources on each candidate carrier, the available time frequency resources of the candidate carrier may be flexibly adjusted and configured according to scenarios and requirements.

As a seventh possible implementation, the carrier handover indication includes a joint indication of the HARQ feedback time and the PRI.

The HARQ feedback time indication is configured to implicitly indicate a candidate carrier subset where the target carrier is located, and the PRI is configured to indicate a target PUCCH time frequency resource in a time frequency resource set corresponding to the candidate carrier subset.

The four carriers may be divided into two candidate carrier subsets, and each subset has two candidate carriers. For example, there are two candidate carriers of 1 and 2 in the first subset, that is, set1={CC1, CC2}, and there are two candidate carriers of 3 and 4 in the second subset, that is, set2={CC3, CC4}.

Optionally, the multiplexed HARQ feedback time indication is a parity indication. For example, when the value of the HARQ feedback time indication is set to an odd number, it indicates that the candidate carrier subset where the target carrier is located is set1, and when the value of the HARQ feedback time indication is set to an even number, it indicates that the candidate carrier subset where the target carrier is located is set2, and similarly, when the value of the HARQ feedback time indication is set to an even number, it indicates that the candidate carrier subset where the target carrier is located is set1, and when the value of the HARQ feedback time indication is set to an odd number, it indicates that the candidate carrier subset where the target carrier is located is set2.

Optionally, the multiplexed HARQ feedback time indication is a preset specific value indication. For example, when the value of the HARQ feedback time indication is selected from { 1, 2}, it indicates the candidate carrier subset where the target carrier is located is set1, and when the value of the HARQ feedback time indication is selected from {3, 4, 5, 6, 7, 8}, it indicates the candidate carrier subset where the target carrier is located is set2. It may be understood that, setting of the preset specific value may be flexibly configured according to scenarios and requirements.

It should be noted that, there are no more than 8 available PUCCH time frequency resources in total in the time frequency resource set corresponding to each candidate carrier subset. For example, the available PUCCH time frequency resources of the candidate carriers in the first subset are set to {CC1 resource0, CC1 resource 1, CC2 resource2, CC2 resource3, CC2 resource4, CC2 resources, CC2 resources6, CC2 resource7}.

For example, when the PRI is set to 000, it indicates that the target PUCCH time frequency resource is resource0; when the PRI is set to 001, it indicates that the target PUCCH time frequency resource is resource1; when the PRI is set to 010, it indicates that the target PUCCH time frequency resource is resource2; when the PRI is set to 011, it indicates that the target PUCCH time frequency resource is resource3; when the PRI is set to 100, it indicates that the target PUCCH time frequency resource is resource4; when the PRI is set to 101, it indicates that the target PUCCH time frequency resource is resource5; when the PRI is set to 110, it indicates that the target PUCCH time frequency resource is resource6; and when the PRI is set to 111, it indicates that the target PUCCH time frequency resource is resource7.

It should be noted that, the available PUCCH time frequency resources of each candidate carrier may be preset. When there are maximum no more than 8 available PUCCH time frequency resources on each candidate carrier, the available time frequency resources of the candidate carrier may be flexibly adjusted and configured according to scenarios and requirements.

It may be understood that, according to embodiments of the disclosure, a size of granularity of the PUCCH time-frequency resources may be flexibly adjusted and configured according to scenarios and requirements.

In addition, for the multiplexed PRI, HARQ feedback time indication, UL/SUL indication, or carrier indication, multiplexing validation indication information for indicating that the multiplexing is valid may be transmitted.

In summary, the carrier handover indication is transmitted, and the carrier handover indication is configured to indicate that the terminal device to determine the target carrier from the four candidate carriers according to the carrier handover indication, so that the terminal may perform the carrier handover according to the indication, which ensures the reliability and feedback efficiency of transmitting the HARQ-ACK, reduces the interference, and enhances the load balance.

Corresponding to the method for carrier handover according to the above several embodiments, an apparatus for carrier handover is further provided. Since the apparatus for carrier handover according to embodiments of the disclosure corresponds to the method according to the several embodiments, an implementation of the method for carrier handover is applicable to the apparatus for carrier handover according to the following embodiments, which will not be described below.

Referring to FIG. 8, FIG. 8 is a block diagram illustrating an apparatus for carrier handover according to embodiments of the disclosure.

As illustrated in FIG. 8, the apparatus 800 for carrier handover includes a transceiving unit 810 and a processing unit 820.

The transceiving unit 810 is configured to receive a carrier handover indication.

The processing unit 820 is configured to determine, from candidate carriers, a target carrier of a PUCCH according to the carrier handover indication.

The carrier handover indication includes at least one of: an additional field in a DCI; a multiplexed PRI; a multiplexed HARQ feedback time indication; a multiplexed UL/SUL indication; or a multiplexed carrier indication in a DCI.

Optionally, a number of the candidate carriers is two, and the carrier handover indication includes the multiplexed PRI.

The multiplexed PRI includes at least one bit and is configured to indicate the carrier handover between the two candidate carriers.

Optionally, a number of the candidate carriers is two, and the carrier handover indication includes the multiplexed HARQ feedback time indication.

The HARQ feedback time indication is configured to implicitly indicate the carrier handover between the two candidate carriers.

Optionally, a number of the candidate carriers is two, and the carrier handover indication includes the multiplexed UL/SUL indication.

The UL/SUL indication is configured to indicate the carrier handover between the two candidate carriers.

Optionally, a number of the candidate carriers is four, and the carrier handover indication includes the multiplexed PRI.

The multiplexed PRI includes first indication information and second indication information, the first indication information is configured to indicate a candidate carrier subset where the target carrier is located or a carrier index of the target carrier, and the second indication information is configured to indicate an available PUCCH time frequency resource of the target carrier.

Optionally, a number of the candidate carriers is four, and the carrier handover indication includes the multiplexed PRI.

The PRI includes third indication information, and the third indication information is configured to indicate the target carrier and a corresponding PUCCH time frequency resource.

Optionally, a number of the candidate carriers is four, and the carrier handover indication includes a joint indication of the UL/SUL and the PRI.

The UL/SUL indication is configured to indicate a candidate carrier subset where the target carrier is located, and the PRI is configured to indicate a target PUCCH time frequency resource in a time frequency resource set corresponding to the candidate carrier subset.

Optionally, a number of the candidate carriers is four, and the carrier handover indication includes a joint indication of the carrier indication in the DCI and the PRI.

The carrier indication is configured to indicate a carrier index of the target carrier, and the PRI is configured to indicate a target PUCCH time frequency resource in a time frequency resource set corresponding to the target carrier.

Optionally, a number of the candidate carriers is four, and the carrier handover indication includes a joint indication of the HARQ feedback time and the PRI.

The HARQ feedback time indication is configured to implicitly indicate a candidate carrier subset where the target carrier is located, and the PRI is configured to indicate a target PUCCH time frequency resource in a time frequency resource set corresponding to the candidate carrier subset.

The apparatus for carrier handover according to the embodiments may receive the carrier handover indication, and determine the target carrier of the PUCCH from the candidate carriers according to the carrier handover indication, so that the terminal may perform the carrier handover according to the indication, which ensures the reliability and feedback efficiency of transmitting the HARQ-ACK, reduces the interference, and enhances the load balance.

Referring to FIG. 9, FIG. 9 is a block diagram illustrating a network device according to embodiments of the disclosure.

As illustrated in FIG. 9, the apparatus 900 for carrier handover includes a transceiving unit 910.

The transceiving unit 910 is configured to transmit a carrier handover indication.

The carrier handover indication is configured to indicate a terminal device to determine a target carrier of a PUCCH from candidate carriers.

The carrier handover indication includes at least one of: an additional field in a DCI; a multiplexed PRI; a multiplexed HARQ feedback time indication; a multiplexed UL/SUL indication; or a multiplexed carrier indication in a DCI.

Optionally, a number of the candidate carriers is two, and the carrier handover indication includes the multiplexed PRI.

The multiplexed PRI includes at least one bit and is configured to indicate the carrier handover between the two candidate carriers.

Optionally, a number of the candidate carriers is two, and the carrier handover indication includes the multiplexed HARQ feedback time indication.

The HARQ feedback time indication is configured to implicitly indicate the carrier handover between the two candidate carriers.

Optionally, a number of the candidate carriers is two, and the carrier handover indication includes the multiplexed UL/SUL indication.

The UL/SUL indication is configured to indicate the carrier handover between the two candidate carriers.

Optionally, a number of the candidate carriers is four, and the carrier handover indication includes the multiplexed PRI.

The multiplexed PRI includes first indication information and second indication information. The first indication information is configured to indicate a candidate carrier subset where the target carrier is located or a carrier index of the target carrier, and the second indication information is configured to indicate an available PUCCH time frequency resource of the target carrier.

Optionally, a number of the candidate carriers is four, and the carrier handover indication includes the multiplexed PRI.

The PRI includes third indication information. The third indication information is configured to indicate the target carrier and a corresponding PUCCH time frequency resource.

Optionally, a number of the candidate carriers is four, and the carrier handover indication includes a joint indication of the UL/SUL and the PRI.

The UL/SUL indication is configured to indicate a candidate carrier subset where the target carrier is located, and the PRI is configured to indicate a target PUCCH time frequency resource in a time frequency resource set corresponding to the candidate carrier subset.

Optionally, a number of the candidate carriers is four, and the carrier handover indication includes a joint indication of the carrier indication in the DCI and the PRI.

The carrier indication is configured to indicate a carrier index of the target carrier, and the PRI is configured to indicate a target PUCCH time frequency resource in a time frequency resource set corresponding to the target carrier.

Optionally, a number of the candidate carriers is four, and the carrier handover indication includes a joint indication of the HARQ feedback time and the PRI.

The HARQ feedback time indication is configured to implicitly indicate a candidate carrier subset where the target carrier is located, and the PRI is configured to indicate a target PUCCH time frequency resource in a time frequency resource set corresponding to the candidate carrier subset.

The apparatus for carrier handover in the embodiments may transmit the carrier handover indication, and the carrier handover indication is configured to indicate the terminal device to determine the target carrier of the PUCCH from the candidate carriers according to the carrier handover indication, so that the terminal may perform the carrier handover according to the indication, which ensures the reliability and feedback efficiency of transmitting the HARQ-ACK, reduces the interference, and enhances the load balance.

In order to achieve the above embodiments, a communication device is further provided according to embodiments of the disclosure, and includes a processor and a memory. The memory is stored with a computer program, and the processor executes the computer program stored in the memory, to cause the device to perform the methods according to embodiments of FIGS. 2 to 4.

In order to achieve the above embodiments, a communication device is further provided according to embodiments of the disclosure, and includes a processor and a memory. The memory is stored with a computer program, and the processor executes the computer program stored in the memory, to cause the device to perform the methods according to embodiments of FIGS. 5 to 7.

In order to achieve the above embodiments, a communication device is further provided according to embodiments of the disclosure, and includes a processor and an interface circuit. The interface circuit is configured to receive code instructions and transmit the code instructions to the processor; and the processor is configured to run the code instructions, to perform the methods according to embodiments of FIGS. 2 to 4.

In order to achieve the above embodiments, a communication device is further provided according to embodiments of the disclosure, and includes a processor and an interface circuit. The interface circuit is configured to receive code instructions and transmit the code instructions to the processor; and the processor is configured to run the code instructions, to perform the methods according to embodiments of FIGS. 5 to 7.

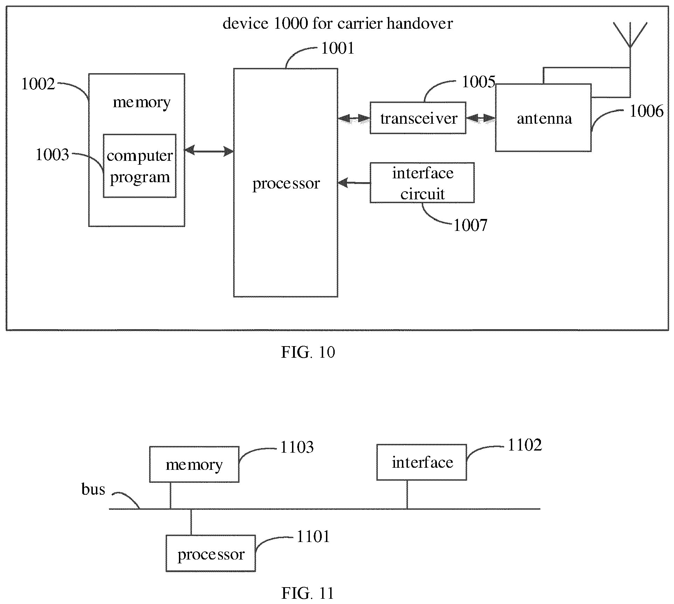

Referring to FIG. 10, FIG. 10 is a block diagram illustrating another device for carrier handover according to embodiments of the disclosure. The device 1000 for carrier handover may be a network device, a terminal device, a chip, a system on chip or a processor that supports the network device to implement the methods, or a chip, a system on chip or a processor that supports the terminal device to implement the methods. The device may be configured to implement the methods described according to the method embodiments, and may refer to descriptions according to the method embodiments.

The device 1000 for carrier handover may include one or more processors 1001. The processor 1001 may be a general-purpose processor, a special-purpose processor, or the like. For example, it may be a baseband processor or a central processing unit. The baseband processor may be used to process communication protocols and communication data. The central processing unit may be used to control the device for carrier handover (such as a base station, a baseband chip, a terminal device, a terminal device chip, a DU, a CU, or the like), to execute a computer program, process data of the computer program, and the like.

Optionally, the device 1000 for carrier handover may further include one or more memories 1002 with a computer program 1003 stored thereon. The processor 1001 executes the computer program 1003 so that the device 1000 for carrier handover performs the methods as described in the above method embodiments. The computer program 1003 may be solidified in the processor 1001and the processor 1001 may be implemented by a hardware.

Optionally, the memory 1002 may further store data. The device 1000 for carrier handover and the memory 1002 may be independently configured or integrated together.

Optionally, the device 1000 for carrier handover may further include a transceiver 1005 and an antenna 1006. The transceiver 1005 may be referred to as a transceiving unit, a transceiver, or a transceiving circuit, which may be configured to achieve a transceiving function. The transceiver 1005 may include a receiver and a transmitter. The receiver may be referred to as a receiver or a receiving circuit, etc., for implementing a receiving function; and the transmitter may be referred to as a transmitter or a transmission circuit, etc. for implementing a transmission function.

Optionally, the device 1000 for carrier handover may further include one or more interface circuits 1007. The interface circuit 1007 is configured to receive code instructions and transmit the code instructions to the processor 1001. The processor 1001 runs code instructions so that the device 1000 for carrier handover performs the methods according to the above method embodiments.

The device 1000 for carrier handover is a terminal device: the transceiver 1005 is configured to execute step 201 in FIG. 2; step 301 in FIG. 3; and step 401 in FIG. 4; and the processor 1001 is configured to execute step 202 in FIG. 2; step 302 in FIG. 3; and step 402 in FIG. 4.

The device 1000 for carrier handover is a network device: the transceiver 1005 is configured to execute step 401 in FIG. 5; step 601 in FIG. 6; and step 701 in FIG. 7.

In an implementation, the processor 1001 may include a transceiver for implementing receiving and transmitting functions. For example, the transceiver may be a transceiver circuit, or an interface, or an interface circuit. The transceiver circuit, or the interface, or the interface circuit for implementing receiving and transmitting functions may be separate or integrated. The above-mentioned transceiver circuit, interface, or interface circuit may be used for reading and writing code/data, or the above-mentioned transceiver circuit, interface, or interface circuit may be used for signal transmission/reception.

In an implementation, the device 1000 for carrier handover may include a circuit. The circuit may implement the functions of sending or receiving or communicating in the foregoing method embodiments. The processor and the transceiver described in the disclosure may be implemented in an integrated circuits (IC), an analog IC, a radio frequency integrated circuit (RFIC), a mixed-signal IC, an application specific integrated circuit (ASIC), a printed circuit board (PCB), electronic equipment, or the like. The processor and the transceiver may also be fabricated using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The device for carrier handover described according to the above embodiments may be a network device or a terminal device, but the scope of the device for carrier handover described in the disclosure is not limited thereto, and a structure of the device for carrier handover may not be subject to FIG. 8 and FIG. 9. The device for carrier handover may be a stand-alone device or may be a part of a larger device. For example, the device for carrier handover may be:
(1) a stand-alone IC, or a chip, or a chip system, or a chip subsystem;
(2) a set of one or more ICs, optionally, the set may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handset, a mobile unit, an in-vehicle device, a network device, a cloud device, an artificial intelligence device, etc.;
(6) others.

In the case that the he device for carrier handover may be a chip or a system on chip, reference may be made to the schematic structure diagram of the chip as illustrated in FIG. 11. The chip illustrated in FIG. 11 may include a processor 1101 and an interface 1102. There may be one or more processors 1101, and there may be a plurality of interfaces 1102.

For the case where the chip is used to implement functions of the network device in the embodiments of the disclosure:
the interface 1102 is configured for code instructions and transmit the code instructions to the processor; and
the processor 1101 is configured to run code instructions to perform the methods as described in FIGS. 2 to 4.

For the case where the chip is used to implement functions of the terminal device in the embodiments of the disclosure:
the interface 1102 is configured for code instructions and transmit the code instructions to the processor; and
the processor 1101 is configured to run code instructions to perform the methods as described in FIGS. 5 to 7.

Optionally, the chip further includes a memory 1103. The memory 1103 is configured to save a necessary computer program and data.

Those skilled in the art may also understand that various illustrative logical blocks and steps listed in the embodiments of the disclosure may be implemented in electronic hardware, computer software, or a combination thereof. Whether such function is implemented in hardware or software depends on specific applications and overall system design requirements. Those skilled in the art may use various manners to implement functions for each specific application, but such implementation should not be understood as exceeding the protection scope of the embodiments of the disclosure.

A communication system is further provided according to embodiments of the disclosure. The system includes a device for carrier handover serving as a terminal device and a device for carrier handover serving as a network device according to embodiments of FIG. 8 and FIG. 9, or the system includes a device for carrier handover serving as a terminal device and a device for carrier handover serving as a network device according to embodiments of FIG. 10.

A readable storage medium with instructions stored thereon is further provided in the disclosure. When the instructions are executed by a computer, steps in the any one method embodiment are implemented.

A computer program product is further provided. The computer program product implements functions of the above any one method embodiment when executed by a processor.

In the above-mentioned embodiments, it may be implemented in whole or in part by software, hardware, firmware, or any combination thereof. When it is implemented in software, it may be implemented in whole or in part in a form of computer program product. The computer program product includes one or more computer programs. When the computer programs are loaded and executed on the computer, flows or functions according to the embodiments of the disclosure may be generated in whole or in part. The computer may be a general purpose computer, a special purpose computer, a computer network, or other programmable device. The computer programs may be stored on a computer-readable storage medium or transferred from one computer-readable storage medium to another computer-readable storage medium, for example, the computer programs may be transferred from a website site, a computer, a server, or a data center over a wire (e.g. coaxial cable, optical fiber, digital subscriber line (DSL)) or wireless (e.g. infrared, wireless, microwave) means to another website site, another computer, another server, or another data center. The computer-readable storage medium may be any available medium that may be accessed by a computer or a data storage device such as a server, a data center, or the like that includes an integration of one or more available media. The available medium may be a magnetic medium (e.g., floppy disk, hard disk, magnetic tape), an optical medium (e.g., high-density digital video disc (DVD)), a semiconductor medium (e.g., solid state disk (SSD)), or the like.

Those skilled in the art may understand that the first, second, and other numeral numbers involved in the disclosure are only for the convenience of description, and are not used to limit the scope of the embodiments of the disclosure, which also represent a sequence.

At least one in this disclosure may also be described as one or more, which is not limited in this disclosure. A plurality of or multiple in this disclosure may be two, three, four, or more, which is not limited in this disclosure. In the embodiments of the disclosure, for a type of technical features, the technical features are distinguished by "first", "second", "third", "A", "B", "C" and "D", etc. There is no order or order of magnitude for the technical features described in "first", "second", "third", "A", "B", "C" and "D", etc.

The corresponding relationships shown in each table in this disclosure may be configured or predefined. Information values in each table are only examples and may be configured with other values, which are not limited in this disclosure. When configuring the corresponding relationships between the information and each parameter, it is not necessarily required to configure all the corresponding relationships indicated in each table. For example, in each table in this disclosure, the corresponding relationships shown in some rows may not be configured. For another example, appropriate deformation adjustments may be made based on each table, such as splitting, merging. The names of the parameters shown in the headings in each tables may also adopt other names that may be understood by the communication device, and the values or representations of the parameters may also be other values or representations that the communication device may understand. When each table is implemented, other data structures may also be used, for example, an array, a queue, a container, a stack, a linear table, a pointer, a link list, a tree, a graph, a structure, a class, a heap, a hash table, or the like.

Predefined in this disclosure may be understood as defined, predefined, stored, pre-stored, pre-negotiated, pre-configured, cured, or pre-fired.

Those skilled in the art may realize that units and algorithm steps of each example described in conjunction with the embodiments disclosed herein may be implemented in electronic hardware, or a combination of computer software and electronic hardware. Whether these functions are performed in hardware or software depends on the specific applications and design constraints of the technical solutions. Those skilled in the art may implement the described functions using different methods for each particular application, but such implementations should not be considered beyond the scope of this disclosure.

Those skilled in the art may clearly understand that, for the convenience and brevity of description, the specific working processes of the above-described systems, devices, and units may refer to the corresponding processes in the foregoing method embodiments, which will not be repeated herein.

It should be noted that various forms of processes shown above may be used to reorder, add, or delete steps. For example, steps described in embodiments of the present disclosure may be executed in parallel, sequentially, or in a different order, as long as the desired result of the technical solution disclosed in the present disclosure may be achieved, which will not be limited herein.

The above are only specific implementations of the disclosure, but the scope of the disclosure is not limited to this. Those skilled in the art who is familiar with the technical scope disclosed in the disclosure may easily think of changes or replacements, which should cover within the scope of this disclosure. Therefore, the scope of the disclosure shall be subject to the scope of the claims.

## Claims

1. A method for carrier handover, performed by a terminal device, comprising:
receiving a carrier handover indication; and
determining, from a plurality of candidate carriers, a target carrier of a physical uplink control channel (PUCCH) according to the carrier handover indication;
wherein the carrier handover indication comprises at least one of:
an additional field in a downlink control information (DCI);
a multiplexed PUCCH resource indication (PRI);
a multiplexed hybrid automatic repeat request (HARQ) feedback time indication;
a multiplexed uplink/supplementary uplink (UL/SUL) indication; or
a multiplexed carrier indication in a DCI.

2. The method according to claim 1, wherein the plurality of candidate carriers consists of two candidate carriers, and the carrier handover indication comprises the additional field in the DCI; and
wherein the additional field comprises at least one bit and is configured to indicate the carrier handover between the two candidate carriers.

3. The method according to claim 1, wherein the plurality of candidate carriers consists of two candidate carriers, and the carrier handover indication comprises the multiplexed PRI; and
wherein the multiplexed PRI comprises at least one bit and is configured to indicate the carrier handover between the two candidate carriers.

4. The method according to claim 1, wherein the plurality of candidate carriers consists of two candidate carriers, and the carrier handover indication comprises the multiplexed HARQ feedback time indication; and
wherein the HARQ feedback time indication is configured to implicitly indicate the carrier handover between the two candidate carriers.

5. The method according to claim 1, wherein the plurality of candidate carriers consists of two candidate carriers, and the carrier handover indication comprises the multiplexed UL/SUL indication; and
wherein the UL/SUL indication is configured to indicate the carrier handover between the two candidate carriers.

6. The method according to claim 1, wherein the plurality of candidate carriers consists of four candidate carriers, and the carrier handover indication comprises the multiplexed PRI; and
wherein the multiplexed PRI comprises first indication information and second indication information, wherein the first indication information is configured to indicate a candidate carrier subset where the target carrier is located or a carrier index of the target carrier, and the second indication information is configured to indicate an available PUCCH time frequency resource of the target carrier.

7. The method according to claim 1, wherein the plurality of candidate carriers consists of four candidate carriers, and the carrier handover indication comprises the multiplexed PRI; and
wherein the PRI comprises third indication information, wherein the third indication information is configured to indicate the target carrier and a corresponding PUCCH time frequency resource.

8. The method according to claim 1, wherein the plurality of candidate carriers consists of four candidate carriers, and the carrier handover indication comprises a joint indication of the UL/SUL and the PRI; and
wherein the UL/SUL indication is configured to indicate a candidate carrier subset where the target carrier is located, and the PRI is configured to indicate a target PUCCH time frequency resource in a time frequency resource set corresponding to the candidate carrier subset.

9. The method according to claim 1, wherein the plurality of candidate carriers consists of four candidate carriers, and the carrier handover indication comprises a joint indication of the carrier indication in the DCI and the PRI; and
wherein the carrier indication is configured to indicate a carrier index of the target carrier, and the PRI is configured to indicate a target PUCCH time frequency resource in a time frequency resource set corresponding to the target carrier.

10. The method according to claim 1, wherein the plurality of candidate carriers consists of four candidate carriers, and the carrier handover indication comprises a joint indication of the HARQ feedback time and the PRI; and
wherein the HARQ feedback time indication is configured to implicitly indicate a candidate carrier subset where the target carrier is located, and the PRI is configured to indicate a target PUCCH time frequency resource in a time frequency resource set corresponding to the candidate carrier subset.

11. A method for carrier handover, performed by a network device, comprising:
transmitting a carrier handover indication;
wherein the carrier handover indication is configured to indicate a terminal device to determine, from a plurality of candidate carriers, a target carrier of a physical uplink control channel (PUCCH);
wherein the carrier handover indication comprises at least one of:
an additional field in a downlink control information (DCI);
a multiplexed PUCCH resource indication (PRI);
a multiplexed hybrid automatic repeat request (HARQ) feedback time indication;
a multiplexed uplink/supplementary uplink (UL/SUL) indication; or
a multiplexed carrier indication in a DCI.

12. The method according to claim 11, wherein the plurality of candidate carriers consists of two candidate carriers, and the carrier handover indication comprises the additional field in the DCI; and
wherein the additional field comprises at least one bit and is configured to indicate the carrier handover between the two candidate carriers.

13. The method according to claim 11, wherein the plurality of candidate carriers consists of two candidate carriers, and the carrier handover indication comprises the multiplexed PRI; and
wherein the multiplexed PRI comprises at least one bit and is configured to indicate the carrier handover between the two candidate carriers.

14. The method according to claim 11, wherein the plurality of candidate carriers consists of two candidate carriers, and the carrier handover indication comprises the multiplexed HARQ feedback time indication; and
wherein the HARQ feedback time indication is configured to implicitly indicate the carrier handover between the two candidate carriers.

15. The method according to claim 11, wherein the plurality of candidate carriers consists of two candidate carriers, and the carrier handover indication comprises the multiplexed UL/SUL indication; and
wherein the UL/SUL indication is configured to indicate the carrier handover between the two candidate carriers.

16. The method according to claim 11, wherein the plurality of candidate carriers consists of four candidate carriers, and the carrier handover indication comprises the multiplexed PRI; and
wherein the multiplexed PRI comprises first indication information and second indication information, wherein the first indication information is configured to indicate a candidate carrier subset where the target carrier is located or a carrier index of the target carrier, and the second indication information is configured to indicate an available PUCCH time frequency resource of the target carrier.

17. The method according to claim 11, wherein the plurality of candidate carriers consists of four candidate carriers, and the carrier handover indication comprises the multiplexed PRI; and
wherein the PRI comprises third indication information, wherein the third indication information is configured to indicate an available PUCCH time frequency resource of the target carri er.

18. The method according to claim 11, wherein the plurality of candidate carriers consists of four candidate carriers, and the carrier handover indication comprises a joint indication of the UL/SUL and the PRI; and
wherein the UL/SUL indication is configured to indicate a candidate carrier subset where the target carrier is located, and the PRI is configured to indicate a target PUCCH time frequency resource in a time frequency resource set corresponding to the candidate carrier subset.

19. The method according to claim 11, wherein the plurality of candidate carriers consists of four candidate carriers, and the carrier handover indication comprises a joint indication of the carrier indication in the DCI and the PRI; and
wherein the carrier indication is configured to indicate a carrier index of the target carrier, and the PRI is configured to indicate a target PUCCH time frequency resource in a time frequency resource set corresponding to the target carrier.

20. The method according to claim 11, wherein the plurality of candidate carriers consists of four candidate carriers, and the carrier handover indication comprises a joint indication of the HARQ feedback time and the PRI; and
wherein the HARQ feedback time indication is configured to indicate a candidate carrier subset where the target carrier is located, and the PRI is configured to indicate a target PUCCH time frequency resource in a time frequency resource set corresponding to the candidate carrier subset.

21. An apparatus for carrier handover, comprising:
a transceiving unit, configured to receive a carrier handover indication; and
a processing unit, configured to determine, from a plurality of candidate carriers, a target carrier of a physical uplink control channel (PUCCH) according to the carrier handover indication;
wherein the carrier handover indication comprises at least one of:
an additional field in a downlink control information (DCI);
a multiplexed PUCCH resource indication (PRI);
a multiplexed hybrid automatic repeat request (HARQ) feedback time indication;
a multiplexed uplink/supplementary uplink (UL/SUL) indication; or
a multiplexed carrier indication in a DCI.

22. The apparatus according to claim 21, wherein the plurality of candidate carriers consists of two candidate carriers, and the carrier handover indication comprises the additional field in the DCI; and
wherein the additional field comprises at least one bit and is configured to indicate the carrier handover between the two candidate carriers.

23. The apparatus according to claim 21, wherein the plurality of candidate carriers consists of two candidate carriers, and the carrier handover indication comprises the multiplexed PRI; and
wherein the multiplexed PRI comprises at least one bit and is configured to indicate the carrier handover between the two candidate carriers.

24. The apparatus according to claim 21, wherein the plurality of candidate carriers consists of two candidate carriers, and the carrier handover indication comprises the multiplexed HARQ feedback time indication; and
wherein the HARQ feedback time indication is configured to implicitly indicate the carrier handover between the two candidate carriers.

25. The apparatus according to claim 21, wherein the plurality of candidate carriers consists of two candidate carriers, and the carrier handover indication comprises the multiplexed UL/SUL indication; and
wherein the UL/SUL indication is configured to indicate the carrier handover between the two candidate carriers.

26. The apparatus according to claim 21, wherein the plurality of candidate carriers consists of four candidate carriers, and the carrier handover indication comprises the multiplexed PRI; and
wherein the multiplexed PRI comprises first indication information and second indication information, wherein the first indication information is configured to indicate a candidate carrier subset where the target carrier is located or a carrier index of the target carrier, and the second indication information is configured to indicate an available PUCCH time frequency resource of the target carrier.

27. The apparatus according to claim 21, wherein the plurality of candidate carriers consists of four candidate carriers, and the carrier handover indication comprises the multiplexed PRI; and
wherein the PRI comprises third indication information, wherein the third indication information is configured to indicate the target carrier and a corresponding PUCCH time frequency resource.

28. The apparatus according to claim 21, wherein the plurality of candidate carriers consists of four candidate carriers, and the carrier handover indication comprises a joint indication of the UL/SUL and the PRI; and
wherein the UL/SUL indication is configured to indicate a candidate carrier subset where the target carrier is located, and the PRI is configured to indicate a target PUCCH time frequency resource in a time frequency resource set corresponding to the candidate carrier subset.

29. The apparatus according to claim 21, wherein the plurality of candidate carriers consists of four candidate carriers, and the carrier handover indication comprises a joint indication of the carrier indication in the DCI and the PRI; and
wherein the carrier indication is configured to indicate a carrier index of the target carrier, and the PRI is configured to indicate a target PUCCH time frequency resource in a time frequency resource set corresponding to the target carrier.

30. The apparatus according to claim 21, wherein the plurality of candidate carriers consists of four candidate carriers, and the carrier handover indication comprises a joint indication of the HARQ feedback time and the PRI; and
wherein the HARQ feedback time indication is configured to implicitly indicate a candidate carrier subset where the target carrier is located, and the PRI is configured to indicate a target PUCCH time frequency resource in a time frequency resource set corresponding to the candidate carrier subset.

31. An apparatus for carrier handover, comprising:
a transceiving unit, configured to transmit a carrier handover indication;
wherein the carrier handover indication is configured to indicate a terminal device to determine, from a plurality of candidate carriers, a target carrier of a physical uplink control channel (PUCCH);
wherein the carrier handover indication comprises at least one of:
an additional field in a downlink control information (DCI);
a multiplexed PUCCH resource indication (PRI);
a multiplexed hybrid automatic repeat request (HARQ) feedback time indication;
a multiplexed uplink/supplementary uplink (UL/SUL) indication; or
a multiplexed carrier indication in a DCI.

32. The apparatus according to claim 31, wherein the plurality of candidate carriers consists of two candidate carriers, and the carrier handover indication comprises the additional field in the DCI; and
wherein the additional field comprises at least one bit and is configured to indicate the carrier handover between the two candidate carriers.

33. The apparatus according to claim 31, wherein the plurality of candidate carriers consists of two candidate carriers, and the carrier handover indication comprises the multiplexed PRI; and
wherein the multiplexed PRI comprises at least one bit and is configured to indicate the carrier handover between the two candidate carriers.

34. The apparatus according to claim 31, wherein the plurality of candidate carriers consists of two candidate carriers, and the carrier handover indication comprises the multiplexed HARQ feedback time indication; and
wherein the HARQ feedback time indication is configured to implicitly indicate the carrier handover between the two candidate carriers.

35. The apparatus according to claim 31, wherein the plurality of candidate carriers consists of two candidate carriers, and the carrier handover indication comprises the multiplexed UL/SUL indication; and
wherein the UL/SUL indication is configured to indicate the carrier handover between the two candidate carriers.

36. The apparatus according to claim 31, wherein the plurality of candidate carriers consists of four candidate carriers, and the carrier handover indication comprises the multiplexed PRI; and
wherein the multiplexed PRI comprises first indication information and second indication information, wherein the first indication information is configured to indicate a candidate carrier subset where the target carrier is located or a carrier index of the target carrier, and the second indication information is configured to indicate an available PUCCH time frequency resource of the target carrier.

37. The apparatus according to claim 31, wherein the plurality of candidate carriers consists of four candidate carriers, and the carrier handover indication comprises the multiplexed PRI; and
wherein the PRI comprises third indication information, wherein the third indication information is configured to indicate an available PUCCH time frequency resource of the target carrier.

38. The apparatus according to claim 31, wherein the plurality of candidate carriers consists of four candidate carriers, and the carrier handover indication comprises a joint indication of the UL/SUL and the PRI; and
wherein the UL/SUL indication is configured to indicate a candidate carrier subset where the target carrier is located, and the PRI is configured to indicate a target PUCCH time frequency resource in a time frequency resource set corresponding to the candidate carrier subset.

39. The apparatus according to claim 31, wherein the plurality of candidate carriers consists of four candidate carriers, and the carrier handover indication comprises a joint indication of the carrier indication in the DCI and the PRI; and
wherein the carrier indication is configured to indicate a carrier index of the target carrier, and the PRI is configured to indicate a target PUCCH time frequency resource in a time frequency resource set corresponding to the target carrier.

40. The apparatus according to claim 31, wherein the plurality of candidate carriers consists of four candidate carriers, and the carrier handover indication comprises a joint indication of the HARQ feedback time and the PRI; and
wherein the HARQ feedback time indication is configured to indicate a candidate carrier subset where the target carrier is located, and the PRI is configured to indicate a target PUCCH time frequency resource in a time frequency resource set corresponding to the candidate carrier subset.

41. A communication device, comprising a processor and a memory, wherein the memory is stored with a computer program, and the processor executes the computer program stored in the memory, to cause the device to perform the method according to any one of claims 1 to 10.

42. A communication device, comprising a processor and a memory, wherein the memory is stored with a computer program, and the processor executes the computer program stored in the memory, to cause the device to perform the method according to any one of claims 11 to 20.

43. A communication device, comprising a processor and an interface circuit;
wherein the interface circuit is configured to receive code instructions and transmit the code instructions to the processor; and
the processor is configured to run the code instructions to perform the method according to any one of claims 1 to 10.

44. A communication device, comprising a processor and an interface circuit;
wherein the interface circuit is configured to receive code instructions and transmit the code instructions to the processor; and
the processor is configured to run the code instructions to perform the method according to any one of claims 11 to 20.

45. A computer-readable storage medium for storing instructions, wherein when the instructions are executed, the method according to any one of claims 1 to 10 is caused to be implemented.

46. A computer-readable storage medium for storing instructions, wherein when the instructions are executed, the method according to any one of claims 11 to 20 is caused to be implemented.
